# EUROPÄISCHE PATENTSCHRIFT

(11) **EP 2 714 586 B1**
(45) Veröffentlichungstag und Bekanntmachung des Hinweises auf die Patenterteilung: **22.07.2015**
(21) Anmeldenummer: 12723832.7
(22) Anmeldetag: 23.05.2012
(51) Int. Cl.: C01B 6/21, C01B 35/12, C01B 35/14, C01C 3/11

(54) **VERFAHREN ZUR HERSTELLUNG VON DIHYDRIDODICYANOBORAT-SALZEN**
PROCESS FOR PREPARING DIHYDRIDODICYANOBORATE SALTS
PROCÉDÉ DE PRÉPARATION DE SELS DE DIHYDRURODICYANOBORATE

(30) Priorität: 31.05.2011 DE 102011103754
(43) Veröffentlichungstag der Anmeldung: 09.04.2014
(73) Patentinhaber: Merck Patent GmbH, 64293 Darmstadt (DE)
(72) Erfinder: IGNATYEV, Nikolai (Mykola), 47058 Duisburg (DE); SCHULTE, Michael, 65474 Bischofsheim (DE); BERNHARDT, Eduard, 42107 Wuppertal (DE); BERNHARDT-PITCHOUGINA, Vera, 42107 Wuppertal (DE); WILLNER, Helge, 45481 Muelheim/Ruhr (DE)
(86) Internationale Anmeldenummer: PCT/EP2012/002178
(87) Internationale Veröffentlichungsnummer: WO 2012/163488

(56) Entgegenhaltungen:
- B.F. SPIELVOGEL ET.AL.: "Synthesis of Sodium and Tetra-n-butylammonium Dicyanodihydroborates", INORG. CHEM., Bd. 23, 1984, Seiten 3263-3265, XP002679582, in der Anmeldung erwähnt
- J. EMRI & B GYÖRI: "A New Method for the Synthesis of Cyanohydroborates and Cyanoborate Complexes", J. CHEM. SOC., CHEM. COMMUN., 1983, Seiten 1303-1304, XP002679583,
- B. GYÖRI ET.AL.: "Preparation and properties of novel cyano and isocyano derivatives of borane and the tetrahydroborate anion", JOURNAL OF ORGANOMETALLIC CHEMISTRY, Bd. 255, 1983, Seiten 17-28, XP002679584, in der Anmeldung erwähnt

## Beschreibung

Die Erfindung betrifft ein Verfahren zur Herstellung von Alkalimetallsalzen mit Dihydridodicyanoboratanionen durch Umsetzung von Alkalimetalltetrahydridoboraten oder -trihydridocyanoboraten mit Trialkylsilylcyanid und deren weitere Umsetzung in Metathesereaktionen.

Eine Synthese von Lithium [BH₂(CN)₂] ist beispielsweise aus B. Györi et al, Journal of Organometallic Chemistry, 1983, 255, 17-28 bekannt, wobei oligomeres 1/n (BH₂CN)ₙ mit LiCN*CH₃CN in Dimethylsulfid umgesetzt wird.

Eine Synthese von Natrium [BH₂(CN)₂] ist beispielsweise aus B.F. Spielvogel et al, Inorg. Chem. 1984, 23, 3262-3265 bekannt, wobei ein Komplex aus Anillin mit BH₂CN mit Natriumcyanid umgesetzt wird. Als Lösungsmittel wird Tetrahydrofuran beschrieben. Auch P.G. Egan et al, Inorg. Chem. 1984, 23, 2203-2204 beschreiben die Synthese des Dioxan-Komplexes Na[BH₂(CN)₂]*0.65(dioxan) basierend auf den Arbeiten von Spielvogel et al., unter Verwendung einer anderen Aufarbeitungsvariante.

M. K. Das et al, Bull. Chem. Soc. Jpn., 1990, 63, 1281-1283 berichten über Reaktionen des Dioxan-Komplexes Na[BH₂(CN)₂]*0.65(dioxan), hergestellt nach der Methode von P.G. Egan et al, mit Aminhydrochloriden oder Phosphinhydrochloriden. In der Regel entsteht dabei das Metatheseprodukt, d.h. quarternäre Ammonium- oder Phosphoniumdicyanodihydridoborate, wie beispielsweise Propylammonium-dicyanodihydridoborat, Bis(*iso*-propyl)ammonium-dicyanodihydridoborat, Tripropylammonium-dicyanodihydridoborat, s-Butylammonium-dicyanodihydridoborat, Dibutylammoniumdicyanodihydridoborat, Bis(*iso*-butyl)ammonium-dicyanodihydridoborat, Triphenylphosphonium-dicyanodihydridoborat, Diethylammoniumdicyanodihydridoborat oder Triethylammonium-dicyanodihydridoborat.

Verbindungen mit organischen Kationen und Dicyanodihydridoboratanion sind beispielsweise aus Zhang Y. and Shreeve J.M., Angew. Chem. 2011, 123, 965-967 bekannt, wobei die Verbindungen durch Anionenaustausch mit Ag[BH₂(CN)₂] hergestellt wurden. Eine Synthese dieses Silberdicyanodihydridoborats wird nicht beschrieben.

Es besteht jedoch weiterhin ein Bedarf nach wirtschaftlichen alternativen Synthesemethoden, um diese interessante Klasse von Salzen mit Dicyanodihydridoboratanion, insbesondere von Alkalimetall-, Ammonium- oder Tetraalkylammoniumsalzen, herzustellen.

Die Aufgabe der vorliegenden Erfindung ist daher ein alternatives Herstellverfahren zu entwickeln, welches in guter Ausbeute zu den gewünschten Salzen führt und dabei von leicht zugänglichen Ausgangsstoffen ausgeht.

Überraschenderweise wurde gefunden, dass Alkalimetalltetrahydridoborate oder -cyanotrihydridoborate hervorragende Ausgangsstoffe für die Synthese der gewünschten Dicyanodihydridoborate darstellen, die leicht zugänglich oder kommerziell zugänglich sind.

Der Gegenstand der Erfindung ist daher ein Verfahren zur Herstellung von Salzen der Formel I

Me⁺ [BH₂(CN)₂]⁻ I,

wobei Me⁺ ein Lithium-, Kalium-, Natrium-, Cäsium- oder Rubidiumkation ist,
durch Reaktion eines Salzes der Formel II oder der Formel III

Me⁺ [BH₄]⁻ II,

Me⁺ [BH₃(CN)]⁻ III,

wobei
Me⁺ eine zuvor angegebene Bedeutung hat, mit einem Trialkylsilylcyanid, wobei die Alkylgruppe des Trialkylsilylcyanids jeweils unabhängig voneinander eine lineare oder verzweigte Alkylgruppe mit 1 bis 4 C-Atomen bedeutet.

Das erfindungsgemäße Verfahren ist überraschend, da eine ähnliche Reaktion des Diborans B₂H₆ mit Trialkylsilylcyanid lediglich zu einem Komplex (CH₃)₃SiCN * BH₃ führt, der sich thermisch in gasförmiges (CH₃)₃SiH und festes BH₂CN in polymerer Form zersetzt.(E.C. Evers et al., J. of American Chemical Society, 81, 1959, 4493-4496).

Das erfindungsgemäße Verfahren kann auch zur Synthese von Ammonium- oder Tetraalkylammoniumdicyanodiydridoboraten verwendet werden, wobei die Alkylgruppe des Tetraalkylammoniumkations jeweils unabhängig voneinander eine lineare oder verzweigte Alkylgruppe mit 1 bis 12 C-Atomen bedeutet. Bevorzugte Tetraalkylammoniumkationen sind das Tetramethylammonium-, Tetraethylammonium- oder Tetrabutylammoniumkation.

Eine geradkettige oder synonym dazu lineare oder verzweigte Alkylgruppe mit 1 bis 4 C-Atomen ist beispielsweise Methyl, Ethyl, n-Propyl, Isopropyl, n-Butyl, sec.-Butyl oder tert-Butyl. Eine lineare oder verzweigte Alkylgruppe mit 1 bis 12 C-Atomen umfasst die Ausführungsformen der linearen oder verzweigten Alkylgruppe mit 1 bis 4 C-Atomen und beispielsweise n-Pentyl, n-Hexyl, n-Heptyl, n-Octyl, Ethylhexyl, n-Nonyl, n-Decyl, n-Undecyl oder n-Dodecyl.

Die Alkylgruppen des Trialkylsilylcyanids können gleich oder verschieden sein. Bevorzugt sind die Alkylgruppen gleich. Beispiele von Trialkylsilylcyaniden sind daher Trimethylsilylcyanid, Triethylsilylcyanid, Triisopropylsilylcyanid, Tripropylsilylcyanid oder Tributylsilylcyanid. Besonders bevorzugt wird Trimethylsilylcyanid verwendet, welches käuflich zu erwerben ist oder auch in situ hergestellt werden kann.

Die Verbindungen der Formel II oder III sind kommerziell erhältlich oder durch bekannte Syntheseverfahren zugängig. Die Herstellung der Cyanotrihydridoborate der Formel III gelingt beispielsweise nach Wittig et al., Liebigs Ann. Chem. 1951, 573, 195, durch Umsetzung beispielsweise des Lithiumborhydrids mit Blausäure unter Wasserstoffbildung in Diethylether. R.C. Wade et al., Inorganic Chemistry, 9 (9), 1970, 2146-2150, beschreiben die Synthese von Natriumtrihydridocyanoborat durch Umsetzung von Natriumborhydrid mit Blausäure in THF. DE 2028569 A (1971) and US 3697232 A (1972) beschreiben die Synthese von Verbindungen der Formel (III), wie zuvor beschrieben, in solvatisierter Form durch Reaktion eines Metalltetrahydroborates, Me[BH₄], mit HCN in wasserfreien organischen Lösungsmitteln.

R.O. Hutchins et al., J. of American Chemical Society, 95 (18), 1973, 6131-6133, beschreibt die Synthese von Tetrabutylammoniumtrihidridocyanoborat durch Anionenaustausch, wobei Tetrabutylammoniumhydrogensulfat mit Natrium-trihydridocyanoborat umgesetzt wird. Tetrabutylammonium-trihydridocyanoborat ist ein Feststoff mit einem Schmelzpunkt von 144-145 °C.

Bevorzugt werden Verbindungen der Formel II oder III eingesetzt, bei denen Me⁺ ein Lithium-, Natrium- oder Kaliumkation ist, besonders bevorzugt ein Natrium- oder Kaliumkation, ganz besonders bevorzugt ein Natriumkation.

Ganz besonders bevorzugte Verbindungen der Formel II oder III zur Synthese der Verbindungen der Formel I, wie zuvor beschrieben, sind daher auszuwählen aus Natrium-tetrahydridoborat (oder synonym Natriumborhydrid) oder Natrium-trihydridocyanoborat.

Insbesondere bevorzugt werden Verbindungen der Formel II, wie zuvor beschrieben, oder bevorzugte Verbindungen der Formel II im erfindungsgemäßen Verfahren eingesetzt.

Bevorzugt findet die erfindungsgemäße Herstellung der Verbindungen der Formel I, wie zuvor beschrieben, bei Temperaturen zwischen 10° und 200°C, insbesondere zwischen 15° und 150°C, besonders bevorzugt bei 100° bis 150°C statt.

Die Umsetzung der Verbindungen der Formel II oder der Formel III, wie zuvor beschrieben, mit dem Trialkylsilylcyanid kann ohne Schutzgasatmosphäre durchgeführt werden. Vorzugsweise findet die Reaktion jedoch unter getrockneter Luft oder in einer Inertgasatmosphäre statt.

Die Umsetzung der Verbindungen der Formel II oder der Formel III, wie zuvor beschrieben, mit dem Trialkylsilylcyanid wird bevorzugt ohne Lösungsmittel durchgeführt. Die Umsetzung in Anwesenheit von einem organischen Lösungsmittel, beispielsweise in Anwesenheit von Nitrilien oder Ethern, ist jedoch möglich. Ein bevorzugtes Nitril ist Acetonitril. Bevorzugte Ether sind Tetrahydrofuran, Diethylether oder Dimethoxyethan.

In einer weiteren Ausführungsform wird das verwendete Trialkylsilylcyanid vor der Umsetzung mit einer Verbindung der Formel II oder III, wie zuvor beschrieben, *in situ* aus einem Alkalimetallcyanid und einem Trialkylsilylchlorid hergestellt, unter Anwesenheit von einem Alkalimetalliodid oder -fluorid und gegebenenfalls Iod. Bevorzugt wird hierbei Natriumcyanid und Natriumiodid verwendet oder Kaliumcyanid und Kaliumiodid verwendet, wobei das Alkalimetalliodid bevorzugt in einer Molmenge von 0,1 mol/l bezogen auf 1 mol/l Alkalimetallcyanid und Trialkylsilylchlorid zugegeben wird. Generell basiert dieses Verfahren zur Herstellung auf der Beschreibung von M.T. Reetz, I. Chatziiosifidis, Synthesis, 1982, p. 330; J.K. Rasmussen, S. M. Heilmann and L.R. Krepski, The Chemistry of Cyanotrimethylsilane in G.L. Larson (Ed.) "Advances in Silicon Chemistry", Vol. 1, p. 65-187, JAI Press Inc., 1991 oder WO 2008/102661 A1.

Ein Gegenstand der Erfindung ist daher auch ein Verfahren zur Herstellung von Verbindungen der Formel I, wie zuvor beschrieben, dadurch gekennzeichnet, dass das Trialkylsilylcyanid vor der Umsetzung mit einer Verbindung der Formel II oder Formel III *in situ* aus einem Alkalimetallcyanid und einem Trialkylsilylchlorid in Anwesenheit von einem Alkalimetalliodid und gegebenenfalls Iod hergestellt wird.

Bei Ausführung der erfindungsgemäßen Herstellung von Verbindungen der Formel I, wie zuvor beschrieben, ist es möglich, die erhaltenen Verbindungen aus der Reaktion aufzureinigen und als isolierte, reine Verbindung in einer Umsalzungsreaktion oder Metathesereaktion, bevorzugt mit Verbindungen der Formel IV, wie nachfolgend beschrieben, einzusetzen.

Es ist jedoch in einer weiteren Ausführungsform vorteilhaft, wenn die Verbindung der Formel I nicht zum Reinstoff aufgearbeitet wird, sondern lediglich die in organischen Lösungsmitteln nicht löslichen oder flüchtigen Nebenprodukte, wie beispielsweise Trialkylsilan oder ein Überschuss an Trimethylsilylcyanid, abgetrennt werden und die Verbindung der Formel I ohne weitere Aufreinigung zum Reinstoff mit einer Verbindung der Formel IV, wie nachfolgend beschrieben, umgesetzt wird.

Ein weiterer Gegenstand der Erfindung ist ebenfalls ein Verfahren, wie zuvor detailiert beschrieben, wobei in einer nachfolgenden Reaktion eine Verbindung der Formel I mit einer Verbindung der Formel IV

KtA IV

umgesetzt wird, in der Kt die Bedeutung eines organischen Kations oder eines Metallkations besitzt, wobei das Kation Kt nicht dem eingesetzten Kation Me⁺ der Verbindung der Formel I entspricht und
das Anion A
F-, Cl⁻, Br⁻, I⁻, OH⁻, [HF₂]⁻, [CN]⁻, [SCN]⁻, [R₁COO]⁻, [R₁OC(O)O]⁻, [R₁SO₃], [R₂COO]⁻, [R₂SO₃]⁻, [R₁OSO₃]⁻, [PF₆]⁻, [BF4]⁻, [HSO₄]¹⁻, [NO₃]⁻, [(R₂)₂P(O)O]⁻, [R₂P(O)O₂]²⁻ , [(R₁O)₂P(O)O]⁻, [(R₁O)P(O)O₂]²⁻, [(R₁O)R₁P(O)O]⁻, Tosylat, Malonat, das mit geradkettigen oder verzweigten Alkylgruppen mit 1 bis 4 C-Atomen substituiert sein kann, [HOCO₂]⁻ oder [CO₃]²⁻ bedeutet,
wobei R₁ jeweils unabhängig voneinander eine geradkettige oder verzweigte Alkylgruppe mit 1 bis 12 C-Atomen bedeutet und R₂ jeweils unabhängig voneinander eine geradkettige oder verzweigte perfluorierte Alkylgruppe mit 1 bis 12 C-Atomen bedeutet und wobei in der Formel des Salzes KtA die Elektroneutralität berücksichtigt wird.

Eine perfluorierte lineare oder verzweigte Alkylgruppe mit 1 bis 4 C-Atomen ist beispielsweise Trifluormethyl, Pentafluorethyl, n-Heptafluorpropyl, *iso-*Heptafluorpropyl, *n*-Nonafluorbutyl, sec-Nonafluorbutyl oder *tert-*Nonafluorbutyl. R₂ definiert in Analogie eine lineare oder verzweigte perfluorierte Alkylgruppe mit 1 bis 12 C-Atomen, umfassend die zuvor genannten Perfluoralkylgruppen und beispielsweise perfluoriertes *n*-Hexyl, perfluoriertes *n*-Heptyl, perfluoriertes *n*-Octyl, perfluoriertes Ethylhexyl, perfluoriertes *n*-Nonyl, perfluoriertes *n*-Decyl, perfluoriertes *n*-Undecyl oder perfluoriertes *n*-Dodecyl.

Besonders bevorzugt ist R₂ Trifluormethyl, Pentafluorethyl oder Nonafluorbutyl, ganz besonders bevorzugt Trifluormethyl oder Pentafluorethyl.

Besonders bevorzugt ist R₁ Methyl, Ethyl, *n*-Butyl, *n*-Hexyl oder *n*-Octyl, ganz besonders bevorzugt Methyl oder Ethyl.

Substituierte Malonate sind beispielsweise die Verbindungen - Methyl- oder Ethyl-Malonat.

Vorzugsweise ist das Anion A der Formel IV OH⁻, Cl⁻, Br⁻, I⁻, [CH₃SO₃]⁻ [CH₃OSO₃]⁻, [CF₃COO]⁻, [CF₃SO₃]⁻, [(C₂F₅)₂P(O)O]⁻ oder [CO₃]²⁻, besonders bevorzugt OH⁻, Cl⁻, Br⁻, [CH₃OSO₃]⁻, [CF₃SO₃]⁻, [CH₃SO₃]⁻ oder [(C₂F₅)₂P(O)O]⁻.

Das organische Kation für Kt wird beispielsweise ausgewählt aus Ammoniumkationen, Sulfoniumkationen, Oxoniumkationen, Phosphoniumkationen, Uroniumkationen, Thiouroniumkationen, Guanidiniumkationen oder heterozyklischen Kationen, wie sie nachfolgend insbesondere durch die Formeln (1) bis (8) beschrieben werden, oder Tritylium.

Kt ist besonders bevorzugt ein Oxoniumkation der Formel [(R^{o})₃O]⁺ (1) oder ein Sulfoniumkation der Formel [(R^{o})₃S]⁺ (2), wobei R° jeweils unabhängig voneinander eine geradkettige oder verzweigte Alkylgruppe mit 1-8 C-Atomen, unsubstituiertes Phenyl, durch R^{1*}, OR', N(R')₂, CN oder Halogen substituiertes Phenyl oder, beschränkt auf Sulfoniumkationen der Formel (2), (R"')₂N-bedeutet, wobei R' jeweils unabhängig voneinander H, nicht, teilweise fluoriertes oder perfluoriertes lineares oder verzweigtes C₁- bis C₁₈-Alkyl, gesättigtes C₃-bis C₇-Cycloalkyl, unsubstituiertes oder substituiertes Phenyl bedeutet, R^{1*} jeweils unabhängig voneinander nicht, teilweise fluoriertes oder perfluoriertes lineares oder verzweigtes C₁- bis C₁₈-Alkyl, gesättigtes C₃-bis C₇-Cycloalkyl, unsubstituiertes oder substituiertes Phenyl bedeutet und R'" jeweils unabhängig voneinander lineares oder verzweigtes Alkyl mit 1 bis 6 C-Atomen bedeutet,
oder ein Ammoniumkation der Formel (3),

[NR₄]⁺ (3),

wobei
R jeweils unabhängig voneinander
H, OR', N(R')₂ bedeutet, mit der Maßgabe, dass maximal ein Substituent R in Formel (3) OR' oder N(R')₂ ist,
geradkettiges oder verzweigtes Alkyl mit 1-20 C-Atomen bedeutet, geradkettiges oder verzweigtes Alkenyl mit 2-20 C-Atomen und einer oder mehreren Doppelbindungen bedeutet,
geradkettiges oder verzweigtes Alkinyl mit 2-20 C-Atomen und einer oder mehreren Dreifachbindungen bedeutet,
gesättigtes, teilweise oder vollständig ungesättigtes Cycloalkyl mit 3-7 C-Atomen, das mit geradkettigen oder verzweigten Alkylgruppen mit 1-6 C-Atomen substituiert sein kann, bedeutet,
wobei ein oder zwei Substituenten R vollständig mit Halogenen, insbesondere -F und/oder -Cl substituiert sein können oder wobei ein oder mehrere Substituenten R teilweise mit Halogenen, insbesondere -F und/oder -Cl, und/oder mit -OH, -OR', -CN, -N(R')₂ , -C(O)OH, -C(O)OR',-C(O)R', -C(O)N(R')₂, -SO₂N(R')₂, -C(O)X, -SO₂OH, -SO₂X, -NO₂, -SR',-S(O)R', -SO₂R' substituiert sein können,
und wobei ein oder zwei nicht benachbarte und nicht α-ständige Kohlenstoffatome des R durch Atome und/oder Atomgruppierungen ausgewählt aus der Gruppe -O-, -S-, -S(O)-, -SO₂-, -SO₂O-, -C(O)-,-C(0)0-, -N⁺(R'₂)-, -P(O)R'O-, -C(O)NR'-, -SO₂NR'-, -OP(O)R'O-, -P(O)(N(R')₂)NR'-, -P(R')₂=N- oder -P(O)R'- ersetzt sein können, wobei R' jeweils unabhängig voneinander H, nicht, teilweise fluoriertes oder perfluoriertes, lineares oder verzweigtes C₁- bis C₁₈-Alkyl, gesättigtes C₃-bis C₇-Cycloalkyl, unsubstituiertes oder substituiertes Phenyl bedeutet und X jeweils unabhängig voneinander Halogen bedeutet,
oder ein Phosphoniumkation der Formel (4),

[P(R²)₄]⁺ (4),

wobei
R² jeweils unabhängig voneinander
H, OR' oder N(R')₂ bedeutet,
geradkettiges oder verzweigtes Alkyl mit 1-20 C-Atomen bedeutet, geradkettiges oder verzweigtes Alkenyl mit 2-20 C-Atomen und einer oder mehreren Doppelbindungen bedeutet,
geradkettiges oder verzweigtes Alkinyl mit 2-20 C-Atomen und einer oder mehreren Dreifachbindungen bedeutet,
gesättigtes, teilweise oder vollständig ungesättigtes Cycloalkyl mit 3-7 C-Atomen, das mit geradkettigen oder verzweigten Alkylgruppen mit 1-6 C-Atomen substituiert sein kann, bedeutet,
wobei ein oder zwei Substituenten R² vollständig mit Halogenen, insbesondere -F und/oder -Cl substituiert sein können oder wobei ein oder mehrere Substituenten R² teilweise mit Halogenen, insbesondere -F und/oder -Cl, und/oder mit -OH, -OR', -CN, -N(R')₂ , -C(O)OH, -C(O)OR',-C(O)R', -C(O)N(R')₂, -SO₂N(R')₂, -C(O)X, -SO₂OH, -SO₂X, -NO₂, -SR',-S(O)R', -SO₂R' substituiert sein können,
und wobei ein oder zwei nicht benachbarte und nicht α-ständige Kohlenstoffatome des R² durch Atome und/oder Atomgruppierungen ausgewählt aus der Gruppe -O-, -S-, -S(O)-, -SO-SO₂O-, -C(O)-,-C(O)O-, -N⁺(R'₂)-, -P(O)R'O-, -C(O)NR'-, -SO₂NR'-, -OP(O)R'O-, -P(O)(N(R')₂)NR'-, -P(R')₂=N- oder -P(O)R'- ersetzt sein können, wobei R' jeweils unabhängig voneinander H, nicht, teilweise fluoriertes oder perfluoriertes, lineares oder verzweigtes C₁- bis C₁₈-Alkyl, gesättigtes C₃-bis C₇-Cycloalkyl, unsubstituiertes oder substituiertes Phenyl bedeutet und X jeweils unabhängig voneinander Halogen bedeutet,
oder ein Uroniumkation der Formel (5),

[C(NR³R⁴)(OR-)(NR⁶R⁷)]⁺ (5),

oder dass Kt ein Thiouroniumkation der Formel (6) ist,

[C(NR³R⁴)(SR⁵)(NR⁶R⁷)]⁺ (6),

wobei
R³ bis R⁷ jeweils unabhängig voneinander
H, wobei H für R⁵ ausgeschlossen wird, bedeuten,
geradkettiges oder verzweigtes Alkyl mit 1 bis 20 C-Atomen bedeuten, geradkettiges oder verzweigtes Alkenyl mit 2-20 C-Atomen und einer oder mehreren Doppelbindungen bedeuten,
geradkettiges oder verzweigtes Alkinyl mit 2-20 C-Atomen und einer oder mehreren Dreifachbindungen bedeuten,
gesättigtes, teilweise oder vollständig ungesättigtes Cycloalkyl mit 3-7 C-Atomen, das mit geradkettigen oder verzweigten Alkylgruppen mit 1-6 C-Atomen substituiert sein kann, bedeuten,
wobei ein oder zwei der Substituenten R³ bis R⁷ vollständig mit Halogenen, insbesondere -F und/oder -Cl, und einer oder mehrere der Substituenten R³ bis R⁷ teilweise mit Halogenen, insbesondere -F und/oder -Cl, und/oder-OH, -OR', -N(R')₂ , -CN, -C(O)OH, -C(O)OR', -C(O)R', -C(O)N(R')₂, -SO₂NR'₂, -C(O)X, -SO₂OH, -SO₂X, -SR', -S(O)R', -SO₂R', -NO₂ substituiert sein können und wobei ein oder zwei nicht benachbarte und nicht α-ständige Kohlenstoffatome von R³ bis R⁷ durch Atome und/oder Atomgruppierungen ausgewählt aus der Gruppe -O-, -S-, -S(O)-, -SO₂-,-SO₂O-, -C(O)-, -C(O)O-, -N⁺(R'₂)-, -P(O)R'O-, -C(O)NR'-, -SO₂NR'-, -OP(O)R'O-, -P(O)(N(R')₂)NR'-, -P(R')₂=N- oder -P(O)R'- ersetzt sein können, wobei R' jeweils unabhängig voneinander H, nicht, teilweise fluoriertes oder perfluoriertes, lineares oder verzweigtes C₁- bis C₁₈-Alkyl, gesättigtes C₃- bis C₇-Cycloalkyl, unsubstituiertes oder substituiertes Phenyl bedeutet und X jeweils unabhängig voneinander Halogen bedeutet,
oder ein Guanidiniumkation der Formel (7),

[C(NR⁸R⁹)(NR¹⁰R¹¹)(NR¹²R¹³)]⁺ (7),

wobei
R⁸ bis R¹³ jeweils unabhängig voneinander
H, -CN, N(R')₂, -OR' bedeuten,
geradkettiges oder verzweigtes Alkyl mit 1 bis 20 C-Atomen bedeuten,
geradkettiges oder verzweigtes Alkenyl mit 2-20 C-Atomen und einer oder mehreren Doppelbindungen bedeuten,
geradkettiges oder verzweigtes Alkinyl mit 2-20 C-Atomen und einer oder mehreren Dreifachbindungen bedeuten,
gesättigtes, teilweise oder vollständig ungesättigtes Cycloalkyl mit 3-7 C-Atomen, das mit geradkettigen oder verzweigten Alkylgruppen mit 1-6 C-Atomen substituiert sein kann, bedeuten,
wobei ein oder zwei der Substituenten R⁸ bis R¹³ vollständig mit Halogenen, insbesondere -F und/oder -Cl, und einer oder mehrere der Substituenten R⁸ bis R¹³ teilweise mit Halogenen, insbesondere -F und/oder -Cl, und/oder -OH, -OR', -N(R')₂, -CN, -C(O)OH, -C(O)OR',-C(O)R', -C(O)N(R')₂, -SO₂N(R')₂, -C(O)X, -SO₂OH, -SO₂X, -SR', -S(O)R',-SO₂R',-NO₂ substituiert sein können und wobei ein oder zwei nicht benachbarte und nicht α-ständige Kohlenstoffatome von R⁸ bis R¹³ durch Atome und/oder Atomgruppierungen ausgewählt aus der Gruppe -O-, -S-, -S(O)-, -SO₂-, -SO₂O-, -C(O)-, -C(O)O-, -N⁺(R'₂)-, -P(O)R'O-, -C(0)NR'-, - SO₂NR'-, -OP(O)R'O-, -P(O)(N(R')₂)NR'-, -P(R')₂=N- oder -P(O)R'- ersetzt sein können, wobei R' jeweils unabhängig voneinander H, nicht, teilweise fluoriertes oder perfluoriertes, lineares oder verzweigtes C₁- bis C₁₈-Alkyl, gesättigtes C₃- bis C₇-Cycloalkyl, unsubstituiertes oder substituiertes Phenyl bedeutet und X jeweils unabhängig voneinander Halogen bedeutet,
oder ein heterocyclisches Kation der Formel (8),

   [HetN]^{z+} (8),

   wobei
   - HetN^{z+}: ein heterocyclisches Kation ausgewählt aus der Gruppe 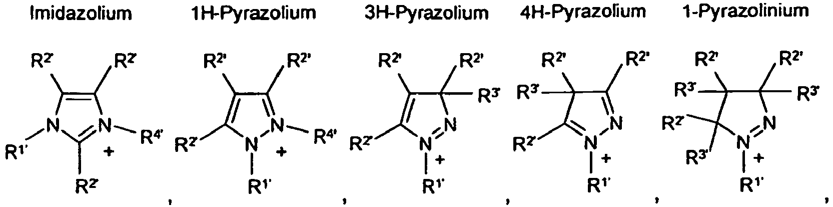 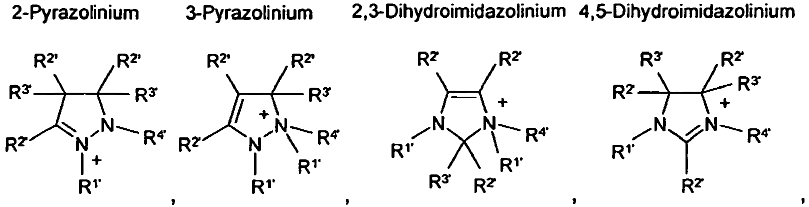 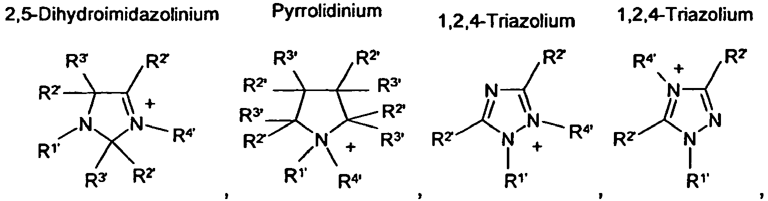 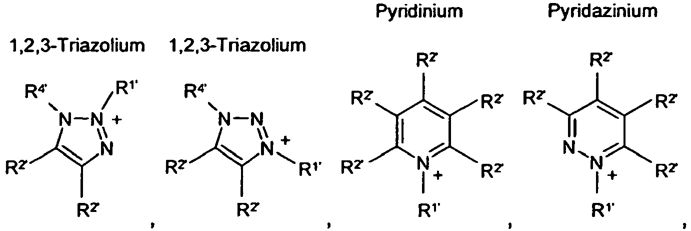 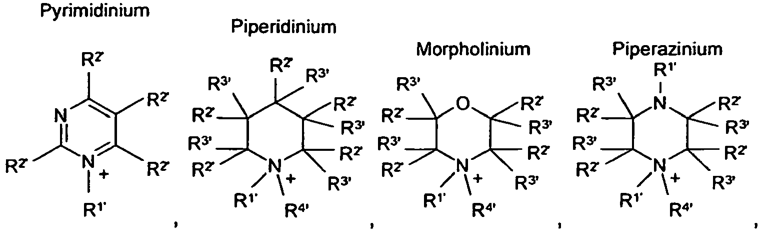 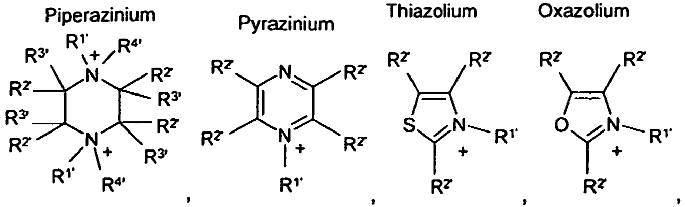 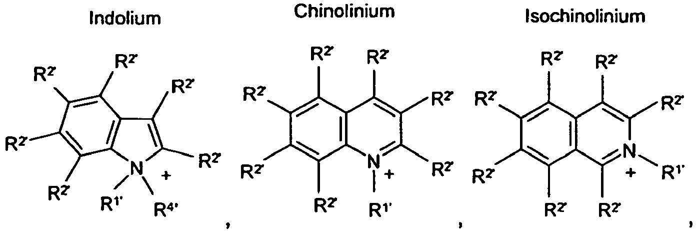 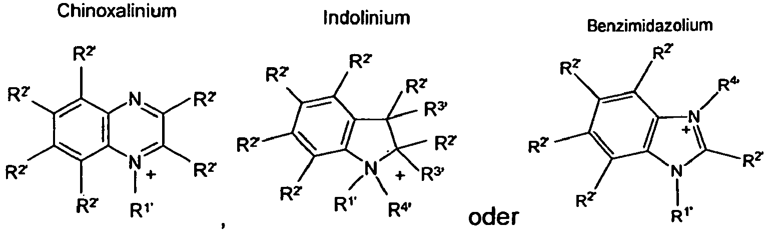
   bedeutet, wobei die Substituenten
R¹' bis R⁴' jeweils unabhängig voneinander
H bedeuten, mit der Maßgabe dass nicht R^{1'} und R^{4'} gemeinsam H sind, geradkettiges oder verzweigtes Alkyl mit 1-20 C-Atomen bedeuten, geradkettiges oder verzweigtes Alkenyl mit 2-20 C-Atomen und einer oder mehreren Doppelbindungen bedeuten,
geradkettiges oder verzweigtes Alkinyl mit 2-20 C-Atomen und einer oder mehreren Dreifachbindungen bedeuten,
gesättigtes, teilweise oder vollständig ungesättigtes Cycloalkyl mit 3-7 C-Atomen, das mit geradkettigen oder verzweigten Alkylgruppen mit 1-6 C-Atomen substituiert sein kann, bedeuten,
gesättigtes, teilweise oder vollständig ungesättigtes Heteroaryl, Heteroaryl-C₁-C₆-alkyl oder Aryl-C₁-C₆-alkyl bedeuten und
R^{2'} zusätzlich F, Cl, Br, I, -CN, -OR', -N(R')₂, -P(O)R'₂, -P(O)(OR')₂,-P(O)(N(R')₂)₂, -C(O)R', -C(O)OR', -C(O)X, -C(O)N(R')₂, -SO₂N(R')₂,-SO₂OH, -SO₂X, -SR', -S(O)R', -SO₂R' und/oder NO₂ bedeutet, mit der Maßgabe, dass dann jeweils unabhängig voneinander R¹', R³' und R⁴'H und/oder ein geradkettiges oder verzweigtes Alkyl mit 1-20 C-Atomen und/oder ein geradkettiges oder verzweigtes Alkenyl mit 2-20 C-Atomen und einer oder mehreren Doppelbindungen sind, wobei die Substituenten R^{1'}, R^{2'}, R^{3'} und/oder R^{4'} zusammen auch ein Ringsystem bilden können,
wobei ein, zwei oder drei Substituenten R¹' bis R⁴' vollständig mit Halogenen, insbesondere -F und/oder -Cl, und ein oder mehrere Substituenten R¹' bis R⁴' teilweise mit Halogenen, insbesondere -F und/oder -Cl, und/oder -OH, -OR', -N(R')₂ , -CN, -C(O)OH, -C(O)OR',-C(O)R', -C(O)N(R')₂, -SO₂N(R')₂, -C(O)X, -SO₂OH, -SO₂X, -SR', -S(O)R',-SO₂R', -NO₂, substituiert sein können, wobei jedoch R^{1'} und R^{4'} nicht gleichzeitig vollständig mit Halogenen substituiert sein dürfen, und wobei ein oder zwei nicht benachbarte und nicht am Heteroatom gebundene Kohlenstoffatome der Substituenten R¹' bis R⁴', durch Atome und/oder Atomgruppierungen ausgewählt aus -O-, -S-, -S(O)-, -SO₂-, -SO₂O-, -C(O)-, -C(O)O-, -N⁺(R'₂)-, -P(O)R'O-, -C(O)NR'-, -SO₂NR'-, -OP(O)R'O-, -P(O)(N(R')₂)NR'-, -P(R')₂=N- oder -P(O)R'- ersetzt sein können, wobei R' jeweils unabhängig voneinander H, nicht, teilweise fluoriertes oder perfluoriertes, lineares oder verzweigtes C₁- bis C₁₈-Alkyl, gesättigtes C₃- bis C₇-Cycloalkyl, unsubstituiertes oder substituiertes Phenyl bedeutet und X jeweils unabhängig voneinander Halogen bedeutet,
oder ein Tritylium-Kation,
oder ein Metallkation der Gruppen 1 bis 12 des Periodensystems, ausgewählt aus Alkalimetallkationen, Ag⁺, Mg²⁺, Cu⁺, Cu²⁻, Zn²⁺, Ca²⁺, Y⁺³, Yb⁺³, La⁺³, Sc⁺³, Ce⁺³, Nd⁺³, Tb⁺³, Sm⁺³ oder komplexe (Liganden enthaltende) Metallkationen, die Seltenerd-, Übergangs- oder Edelmetalle wie Rhodium, Ruthenium, Iridium, Palladium, Platin, Osmium, Kobalt, Nickel, Eisen, Chrom, Molybdän, Wolfram, Vanadium, Titan, Zirconium, Hafnium, Thorium, Uran, Gold enthalten.

Unter vollständig ungesättigten Cycloalkyl Substituenten werden im Sinne der vorliegenden Erfindung auch aromatische Substituenten verstanden. Als Substituenten R und R² bis R¹³ der Verbindungen der Formeln (1) bis (7) kommen erfindungsgemäß dabei neben H bevorzugt in Frage: geradkettige oder verzweigte C₁- bis C₂₀-, insbesondere C₁- bis C₁₄-Alkylgruppen, und gesättigte oder ungesättigte, d.h. auch aromatische, C₃-bis C₇-Cycloalkylgruppen, die mit geradkettigen oder verzweigten C₁- bis C₆-Alkylgruppen substituiert sein können, insbesondere Phenyl.

Die Substituenten R⁰, R und R² in den Verbindungen der Formel (1), (2), (3) oder (4) können dabei gleich oder verschieden sein. Bevorzugt sind bei Verbindungen der Formeln (1) zwei oder drei Substituenten R⁰ gleich. Bei Verbindungen der Formeln (2) sind bevorzugt alle Substituenten R⁰ gleich oder zwei gleich und ein Substituent verschieden. Bei Verbindungen der Formel (3) sind bevorzugt drei oder vier Substituenten R gleich. Bei Verbindungen der Formel (4) sind bevorzugt drei oder vier Subsituenten R² gleich.

Die Substituenten R und R² sind insbesondere bevorzugt Methyl, Ethyl, Isopropyl, Propyl, Butyl, *sek*-Butyl, Pentyl, Hexyl, Octyl, Decyl oder Tetradecyl.

Bis zu vier Substituenten des Guanidinium-Kations [C(NR⁸R⁹)(NR¹⁰R¹¹)(NR¹²R¹³)]⁺ können auch paarweise derart verbunden sein, dass mono-, bi- oder polycyclische Moleküle entstehen.

Ohne Einschränkung der Allgemeinheit sind Beispiele für solche Guanidinium-Kationen: 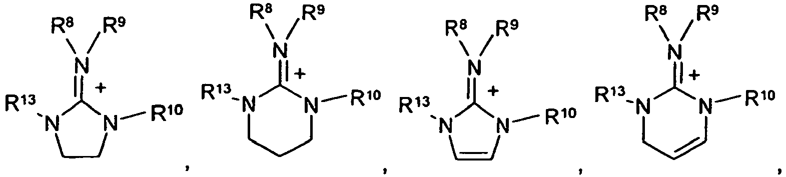 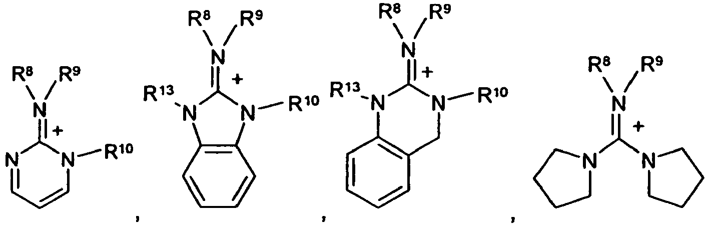 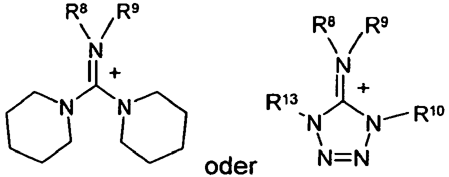 wobei die Substituenten R³ bis R¹⁰ und R¹³ eine zuvor angegebene oder besonders bevorzugte Bedeutung haben können.
Gegebenenfalls können die Carbocyclen oder Heterocyclen der zuvor angegebenen Guanidinium-Kationen noch durch geradkettiges oder verzweigtes C₁- bis C₆-Alkyl, gerdkettiges oder verzweigtes C₁- bis C₆-Alkenyl, -CN, -NO₂, -OH, -F, -Cl, -Br, I, geradkettiges oder verzweigtes C₁-C₆-Alkoxy, -N(R')₂, -SR', -S(O)R', -SO₂R', -COOH, -C(O)OR', -C(O)R',-C(O)N(R')₂, -SO₂N(R')₂, -C(O)X, -SO₂X, -SO₃H, substituiertes oder unsubstituiertes Phenyl oder unsubstituierter oder substituierter Heterocyclus substituiert sein, wobei X und R' eine zuvor genannte Bedeutung haben.

Bis zu vier Substituenten des Thiouroniumkations [C(NR³R⁴)(SR⁵)(NR⁶R⁷)]⁺ oder des Uroniumkations [C(NR³R⁴)(OR⁵)(NR⁶R⁷)]⁺ können auch paarweise derart verbunden sein, dass mono-, bi- oder polycyclische Moleküle entstehen.

Ohne Einschränkung der Allgemeinheit sind im Folgenden Beispiele für solche Uroniumkationen oder Thiouroniumkationen angegeben: 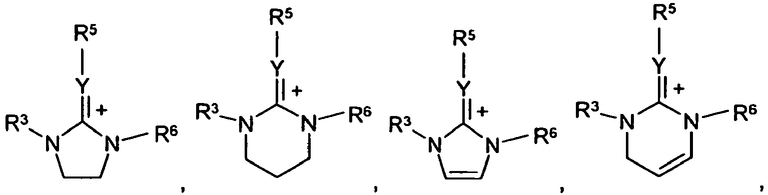 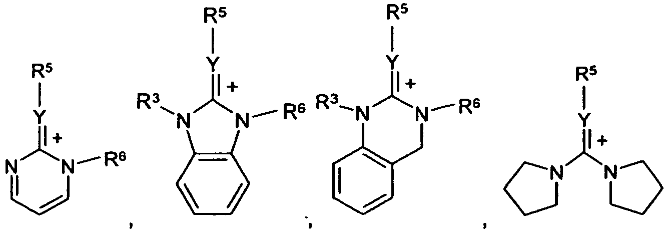 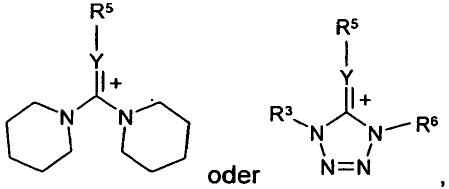 worin Y = S oder O bedeutet
und wobei die Substituenten R³, R⁵ und R⁶ eine zuvor angegebene oder besonders bevorzugte Bedeutung haben können.
Gegebenenfalls können die Carbocyclen oder Heterocyclen der zuvor angegebenen Guanidinium-Kationen noch durch geradkettiges oder verzweigtes C₁- bis C₆-Alkyl, gerdkettiges oder verzweigtes C₁- bis C₆-Alkenyl, -CN, -NO₂, -OH, -F, -Cl, -Br, I, geradkettiges oder verzweigtes C₁-C₆-Alkoxy, -N(R')₂, -SR', -S(O)R', -SO₂R', -COOH, -C(O)OR', -C(O)R',-C(O)N(R')₂, -SO₂N(R')₂, -C(O)X, -SO₂X, -SO₃H, substituiertes oder unsubstituiertes Phenyl oder unsubstituierter oder substituierter Heterocyclus substituiert sein, wobei X und R' eine zuvor genannte Bedeutung haben.

Die Substituenten R³ bis R¹³ sind jeweils unabhängig voneinander bevorzugt eine geradkettige oder verzweigte Alkylgruppe mit 1 bis 10 C-Atomen. Die Substituenten R³ und R⁴, R⁶ und R⁷, R⁸ und R⁹, R¹⁰ und R¹¹ und R¹² und R¹³ in Verbindungen der Formeln (5) bis (7) können dabei gleich oder verschieden sein. Besonders bevorzugt sind R³ bis R¹³ jeweils unabhängig voneinander Methyl, Ethyl, *n*-Propyl, *iso*-Propyl, *n*-Butyl, *tert-*Butyl, *sek*-Butyl, Phenyl oder Cyclohexyl, ganz besonders bevorzugt Methyl, Ethyl, *n*-Propyl, Isopropyl oder *n*-Butyl.

Als Substituenten R^{1'} und R^{4'} von Verbindungen der Formel (8) kommen jeweils unabhängig voneinander bevorzugt in Frage: geradkettige oder verzweigte C₁- bis C₂₀, insbesondere C₁- bis C₁₂-Alkylgruppen, wobei ein oder zwei nicht benachbarte und nicht am Heteroatom gebundene Kohlenstoffatome durch O ersetzt sein können und gesättigte oder ungesättigte, d.h. auch aromatische, C₃- bis C₇-Cycloalkylgruppen, die mit geradkettigen oder verzweigten C₁- bis C₆-Alkylgruppen substituiert sein können, insbesondere Phenyl.

Die Substituenten R¹' und R⁴' sind jeweils unabhängig voneinander insbesondere bevorzugt Methyl, Ethyl, Isopropyl, Propyl, Butyl, sek-Butyl, Pentyl, Hexyl, Octyl, Decyl, Methoxymethyl, Methoxyethyl, Ethoxymethyl, Ethoxymethyl, Cyclohexyl, Phenyl oder Benzyl. Sie sind ganz besonders bevorzugt Methyl, Ethyl, *n*-Butyl oder *n*-Hexyl. In Pyrrolidin-, Piperidin-, Indolin-, Pyrrolidinium-, Piperidinium- oder Indolinium-Verbindungen sind die beiden Substituenten R^{1'} und R^{4'} bevorzugt unterschiedlich.

Der Substituent R²' oder R³' ist jeweils unabhängig voneinander insbesondere H, Methyl, Ethyl, *iso*-Propyl, Propyl, Butyl, *sek*-Butyl, *tert-*Butyl, Cyclohexyl, Phenyl oder Benzyl. Besonders bevorzugt ist R^{2'} H, Methyl, Ethyl, *iso*-Propyl, Propyl, Butyl oder *sek*-Butyl. Ganz besonders bevorzugt sind R^{2'} und R^{3'} H.

Ein geradkettiges oder verzweigtes Alkenyl mit 2 bis 20 C-Atomen, wobei auch mehrere Doppelbindungen vorhanden sein können, ist beispielsweise Allyl, 2- oder 3-Butenyl, *iso*-Butenyl, *sek*-Butenyl, ferner 4-Pentenyl, *iso-*Pentenyl, Hexenyl, Heptenyl, Octenyl, -C₉H₁₇, -C₁₀H₁₉ bis -C₂₀H₃₉; vorzugsweise Allyl, 2- oder 3-Butenyl, *iso*-Butenyl, *sek*-Butenyl, ferner bevorzugt ist 4-Pentenyl, *iso*-Pentenyl oder Hexenyl. Sind die Verbindungen teilfluoriert, so wird mindestens ein H-Atom durch ein F-Atom ausgetauscht. Sind die Verbindungen perfluoriert, so sind alle H-Atome der entsprechenden Alkylgruppe gegen F-Atome ausgetauscht.

Ein geradkettiges oder verzweigtes Alkinyl mit 2 bis 20 C-Atomen, wobei auch mehrere Dreifachbindungen vorhanden sein können, ist beispielsweise Ethinyl, 1- oder 2-Propinyl, 2- oder 3-Butinyl, ferner 4-Pentinyl, 3-Pentinyl, Hexinyl, Heptinyl, Octinyl, -C₉H₁₅, -C₁₀H₁₇ bis -C₂₀H₃₇, vorzugsweise Ethinyl, 1- oder 2-Propinyl, 2- oder 3-Butinyl, 4-Pentinyl, 3-Pentinyl oder Hexinyl. Sind die Verbindungen teilfluoriert, so wird mindestens ein H-Atom durch ein F-Atom ausgetauscht. Sind die Verbindungen perfluoriert, so sind alle H-Atome der entsprechenden Alkylgruppe gegen F-Atome ausgetauscht.

Aryl-C₁-C₆-alkyl bedeutet beispielsweise Benzyl, Phenylethyl, Phenylpropyl, Phenylbutyl, Phenylpentyl oder Phenylhexyl, wobei sowohl der Phenylring als auch die Alkylenkette, wie zuvor beschrieben teilweise oder vollständig mit Halogenen, insbesondere -F und/oder -Cl, oder teilweise mit -OH, -OR', -N(R')₂, -CN, -C(O)OH, -C(O)N(R')₂, -SO₂N(R')₂, -C(O)X, -C(O)OR',-C(O)R', -SO₂OH, -SO₂X, SR', -S(O)R', -SO₂R' oder NO₂ substituiert sein können, wobei R' und X eine zuvor angegebene Bedeutung haben.

Unsubstituierte gesättigte oder teilweise oder vollständig ungesättigte Cycloalkylgruppen mit 3-7 C-Atomen sind daher Cyclopropyl, Cyclobutyl, Cyclopentyl, Cyclohexyl, Cycloheptyl, Cyclopentenyl, Cyclohexenyl, Phenyl, Cycloheptenyl, welche mit geradkettigen oder verzweigten C₁- bis C₆-Alkylgruppen substituiert sein können, wobei wiederum die Cycloalkylgruppe oder die mit geradkettigen oder verzweigten C₁- bis C₆-Alkylgruppen substituierte Cycloalkylgruppe auch mit Halogenatomen wie F, Cl, Br oder I, insbesondere F oder Cl, oder mit -OH, -OR', -N(R')₂, -CN, - C(O)OH, -C(O)N(R')₂, -SO₂N(R')₂, -C(O)X, -C(O)OR', -C(O)R', -SO₂OH, - SO₂X, SR', -S(O)R', -SO₂R' oder NO₂ substituiert sein können, wobei R' und X eine zuvor angegebene Bedeutung haben.

In den Substituenten R, R² bis R¹³ oder R^{1'} bis R^{4'} können auch ein oder zwei nicht benachbarte und nicht α-ständig zum Heteroatom gebundene Kohlenstoffatome, durch Atome und/oder Atomgruppierungen ausgewählt aus der Gruppe -O-, -S-, -S(O)-, -SO₂-, -SO₂O-, -C(O)-, -C(O)O-, -N⁺(R')₂-,-P(O)R'O-, -C(O)NR'-, -SO₂NR', -OP(O)R'O-, -P(O)(N(R')₂)NR'-, -P(R')₂=N-oder -P(O)R' ersetzt werden, wobei R' eine zuvor genannte Bedeutung hat.

Halogen bedeutet F, Cl, Br oder I, vorzugsweise F, Cl oder Br, besonders bevorzugt F oder Cl.

In R' oder R^{1*} ist C₃- bis C₇-Cycloalkyl beispielsweise Cyclopropyl, Cyclobutyl, Cyclopentyl, Cyclohexyl oder Cycloheptyl.

In R' oder R^{1*} bedeutet substituiertes Phenyl, durch geradkettiges oder verzweigtes C₁- bis C₆-Alkyl, geradkettiges oder verzweigtes C₁- bis C₆-Alkenyl, CN, N(R")₂, -NO₂, F, Cl, Br, I, -OH, geradkettiges oder verzweigtes C₁-C₆-Alkoxy, -COOH, -C(O)OR", -C(O)R", -SO₂X', -SR", -S(O)R", -SO₂R", SO₂N(R")₂ oder SO₃H substituiertes Phenyl, wobei R" ein nicht, teilweise oder perfluoriertes geradkettiges oder verzweigtes C₁- bis C₆-Alkyl oder C₃-bis C₇-Cycloalkyl bedeutet und wobei X' F, Cl oder Br bedeutet, beispielsweise, o-, m- oder p-Methylphenyl, o-, m- oder p-Ethylphenyl, o-, m- oder p-Propylphenyl, o-, m- oder p-Isopropylphenyl, o-, m- oder p-(tert-Butyl)phenyl, o-, m- oder p-Methoxyphenyl, o-, m- oder p-Ethoxyphenyl, o-, m-, p-(Trifluormethyl)phenyl, o-, m-, p-(Trifluormethoxy)phenyl, o-, m-, p-(Trifluormethylsulfonyl)phenyl, o-, m- oder p-Fluorphenyl, o-, m- oder p-Chlorphenyl, o-, m- oder p-Bromphenyl, o-, m- oder p-Iodphenyl, weiter bevorzugt 2,3-, 2,4-, 2,5-, 2,6-, 3,4- oder 3,5-Dimethylphenyl, 2,3-, 2,4-, 2,5-, 2,6-, 3,4- oder 3,5-Dihydroxyphenyl, 2,3-, 2,4-, 2,5-, 2,6-, 3,4- oder 3,5-Difluorphenyl, 2,3-, 2,4-, 2,5-, 2,6-, 3,4- oder 3,5-Dichlorphenyl, 2,3-, 2,4-, 2,5-, 2,6-, 3,4- oder 3,5-Dibromphenyl, 2,3-, 2,4-, 2,5-, 2,6-, 3,4- oder 3,5-Dimethoxyphenyl, 5-Fluor-2-methylphenyl, 3,4,5-Trimethoxyphenyl oder 2,4,5-Trimethylphenyl.

In R^{1'} bis R^{4'} wird als Heteroaryl ein gesättigter oder ungesättigter mono- oder bicyclischer heterocyclischer Rest mit 5 bis 13 Ringgliedern verstanden, wobei 1, 2 oder 3 N- und/oder 1 oder 2 S- oder O-Atome vorliegen können und der heterocyclische Rest ein- oder mehrfach durch geradkettiges oder verzweigtes C₁- bis C₆-Alkyl, geradkettiges oder verzweigtes C₁- bis C₆-Alkenyl, CN, N(R")₂, OH, NO₂, F, Cl, Br, I, geradkettiges oder verzweigtes C₁-C₆-Alkoxy, -COOH, -C(O)OR", - C(O)R",-SO₂X', -SO₂N(R")₂, -SR", -S(O)R", -SO₂R" oder SO₃H substituiert sein kann, wobei R" und X' eine zuvor angegebene Bedeutung haben.

Der heterocyclische Rest ist vorzugsweise substituiertes oder unsubstituiertes 2- oder 3-Furyl, 2- oder 3-Thienyl, 1-, 2- oder 3-Pyrrolyl, 1-, 2-, 4- oder 5-Imidazolyl, 3-, 4- oder 5-Pyrazolyl, 2-, 4- oder 5-Oxazolyl, 3-, 4- oder 5-Isoxazolyl, 2-, 4- oder 5-Thiazolyl, 3-, 4- oder 5-Isothiazolyl, 2-, 3- oder 4-Pyridyl, 2-, 4-, 5- oder 6-Pyrimidinyl, weiterhin bevorzugt 1,2,3-Triazol-1-, -4- oder -5-yl, 1,2,4-Triazol-1-, -4- oder -5-yl, 1- oder 5-Tetrazolyl, 1,2,3-Oxadiazol-4- oder -5-yl 1,2,4-Oxadiazol-3- oder -5-yl, 1,3,4-Thiadiazol-2- oder -5-yl, 1,2,4-Thiadiazol-3- oder -5-yl, 1,2,3-Thiadiazol-4- oder -5-yl, 2-, 3-, 4-, 5- oder 6-2H-Thiopyranyl, 2-, 3- oder 4-4H-Thiopyranyl, 3- oder 4-Pyridazinyl, Pyrazinyl, 2-, 3-, 4-, 5-, 6- oder 7-Benzofuryl, 2-, 3-, 4-, 5-, 6- oder 7-Benzothienyl, 1-, 2-, 3-, 4-, 5-, 6- oder 7-1H-Indolyl, 1-, 2-, 4- oder 5-Benzimidazolyl, 1-, 3-, 4-, 5-, 6- oder 7-Benzopyrazolyl, 2-, 4-, 5-, 6- oder 7-Benzoxazolyl, 3-, 4-, 5-, 6- oder 7-Benzisoxazolyl, 2-, 4-, 5-, 6- oder 7-Benzthiazolyl, 2-, 4-, 5-, 6- oder 7-Benzisothiazolyl, 4-, 5-, 6- oder 7-Benz-2,1,3-oxadiazolyl, 1-, 2-, 3-, 4-, 5-, 6-, 7- oder 8-Chinolinyl, 1-, 3-, 4-, 5-, 6-, 7- oder 8-Isochinolinyl, 1-, 2-, 3-, 4- oder 9-Carbazolyl, 1-, 2-, 3-, 4-, 5-, 6-, 7-, 8- oder 9-Acridinyl, 3-, 4-, 5-, 6-, 7- oder 8-Cinnolinyl, 2-, 4-, 5-, 6-, 7- oder 8-Chinazolinyl oder 1-, 2- oder 3-Pyrrolidinyl.

Unter Heteroaryl-C₁-C₆-alkyl wird nun in Analogie zu Aryl-C₁-C₆-alkyl beispielsweise Pyridinyl-methyl, Pyridinyl-ethyl, Pyridinyl-propyl, Pyridinylbutyl, Pyridinyl-pentyl, Pyridinyl-hexyl verstanden, wobei weiterhin die zuvor beschriebenen Heterocyclen in dieser Weise mit der Alkylenkette verknüpft werden können.

HetN⁺ ist bevorzugt 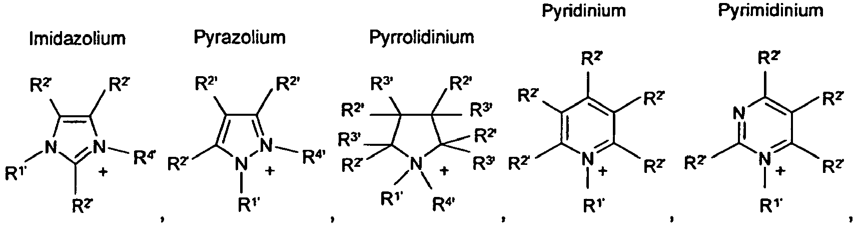 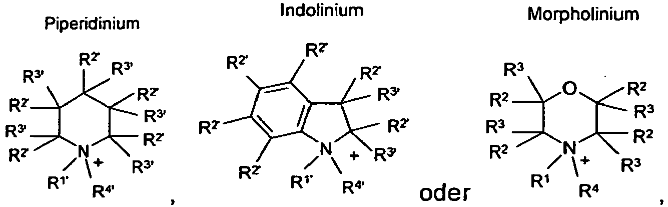 wobei die Substituenten R^{1'} bis R^{4'} jeweils unabhängig voneinander eine zuvor beschriebene Bedeutung haben.

Besonders bevorzugt ist das organische Kation Kt ausgewählt aus der Gruppe umfassend Imidazolium-, Pyridinium-, Pyrrolidinium-, Ammonium- oder Phosphonium-Kationen, wie sie oben durch die angegebenen Formeln und die angegebenen Substituenten definiert sind.

Die Umsalzungsreaktion der Verbindungen der Formel I mit Verbindungen der Formel IV, wie zuvor beschrieben, wird vorteilhaft in Wasser durchgeführt, wobei Temperaturen von 0°-100°C, bevorzugt 15°-60°C geeignet sind. Besonders bevorzugt wird bei Raumtemperatur (25°C) umgesetzt.

Die zuvor genannte Umsalzungsreaktion kann jedoch alternativ auch in organischen Lösungsmitteln bei Temperaturen zwischen -30° und 100°C stattfinden. Geeignete Lösemittel sind hier Acetonitril, Dioxan, Dichlormethan, Dimethoxyethan, Dimethylsulfoxid, Tetrahydrofuran, Dimethylformamid oder Alkohol, beispielsweise Methanol, Ethanol oder Isopropanol.

Die folgenden Ausführungsbeispiele sollen die Erfindung erläutern, ohne sie zu begrenzen. Die Erfindung ist im gesamten beanspruchten Bereich entsprechend ausführbar. Ausgehend von den Beispielen lassen sich auch mögliche Varianten ableiten. Insbesondere sind die Merkmale und Bedingungen der in den Beispielen beschriebenen Reaktionen auch auf andere, nicht im Detail aufgeführte, aber unter den Schutzbereich der Ansprüche fallende Reaktionen anwendbar.

### Beispiele:

Die erhaltenen Stoffe werden Mittels NMR Spektren und Röntgenstrukturanalyse charakterisiert. Die NMR-Spektren werden an Lösungen in deuterierten Aceton-D₆ oder in CD₃CN an einem Bruker Avance III Spektrometer mit Deuterium Lock gemessen. Die Messfrequenzen der verschiedenen Kerne sind: ¹H: 400,17 MHz, ¹¹B: 128,39 MHz , ³¹P: 161,99 MHz und ¹³C: 100,61 MHz. Die Referenzierung erfolgt mit externer Referenz: TMS für ¹H und ¹³C Spektren und BF₃·Et₂O - für ¹¹B Spektren.

### Beispiel 1. Natriumdicyanodihydridoborat- Na[BH₂(CN)₂]

NaBH₄ + 2Me₃SiCN → Na[BH₂(CN)₂] + 2Me₃SiH

37.83 g (1.00 Mol) NaBH₄ und 302 g (3.04 Mol) Trimethylsilylcyanid, Me₃SiCN werden 2 Tage unter Rückfluss in inerter Atmosphäre erwärmt (Ölbadtemperatur ist 150 °C). Entstehendes Trimethylsilan, Me₃SiH (Sdp. 6.7°C) wird in einem Kolben im Eisbad abgefangen. Nach Abkühlen wird das flüssige Reaktionsgemisch zum großen Teil fest. Überschüssiges Trimethylsilylcyanid, Me₃SiCN (101.24 g, 1.02 Mol, 98% der theoretischen Menge) wird im Vakuum vom Produkt Na[BH₂(CN)₂] entfernt. Na[BH₂(CN)₂] wird im Vakuum getrocknet. Die Ausbeute ist 87.85 g (1.00 Mol, 100%).
Röntgenstruktur, Na[BH₂(CN)₂]: a=7.8136(3), b=7.8656(4), c=16.1764(7) Å, α=78.489(4), β=76.882(3), γ=72.197(4) °, V=912.75, Z = 8, P-1, T = 150 K.
¹H{¹¹B}-NMR (Lösungsmittel: CD₃CN; Referenz: TMS): δ, ppm = 0.99 s (2H, BH₂).
¹¹B-NMR (Lösungsmittel: CD₃CN; Referenz: Et₂O·BF₃): δ, ppm = -42.2 t, ¹J_{B,H} = 95 Hz.

### Beispiel 2. Kaliumdicyanodihydridoborat- K[BH₂(CN)₂]

2 Na[BH₂(CN)₂] + K₂CO₃ → 2 K[BH₂(CN)₂] + Na₂CO₃ 24.8 g (0,282 Mol) Natriumdicyanodihydridoborat, Na[BH₂(CN)₂] werden in ca. 20 mL Wasser gelöst und mit 30.2 g (0,219 Mol) K₂CO₃ umgesetzt. Die Lösung wird mit 260 mL Tetrahydrofuran verdünnt und kräftig gerührt. Die organische Phase wird abgetrennt, mit K₂CO₃ getrocknet, das Tetrahydrofuran abdestilliert und der Rest im Vakuum getrocknet. Die Ausbeute an Kaliumdicyanodihydridoborat, K[BH₂(CN)₂] ist 28.1 g (0,270 Mol, 96%)
Das Produkt wird Mittels NMR Spektren und X-Ray Analyse charakterisiert. X-Ray Struktur, K[BH₂(CN)₂]: a=7.3073(3), b=9.5312(3), c=7.3659(3) A, α=90, β=109.965(5), γ=90 °, V=482.18 Z = 4, P2₁/c, T = 150 K.

### Beispiel 3. 1-Ethyl-3-methylimidazolium Dicyanodihydridoborat - EMIM [BH₂(CN)₂]

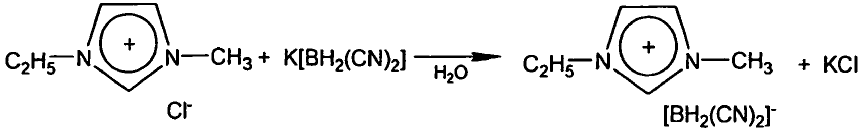

14.04 g (135 mMol) Kaliumdicyanodihydridoborat, K[BH₂(CN)₂] und 19.8 g (135 mMol) 1-Ethyl-3-methylimidazolium Chlorid, [EMIM]CI werden in je 20 mL Wasser gelöst und gemischt. 1-Ethyl-3-methylimidazolium Dicyanodihydridoborat, [EMIM][BH₂(CN)₂] wird mit 130+50+50 mL CH₂Cl₂ extrahiert. Die vereinten organischen Phasen werden mit 80 mL Wasser gewaschen, mit Na₂SO₄ getrocknet und das Lösungsmittel wird abdestilliert. [EMIM][BH₂(CN)₂] wird im Vakuum unter Rühren bei ca. 50 °C zwei Tage getrocknet. Die Ausbeute ist 16.3 g (93 mmol, 69%). Wassergehalt: 44 ppm; Chloridgehalt: 18 ppm;
Viskosität: 10.2 mPa·s (20° C).
Zersetzungstemperatur (onset): ca. 290 °C (DSC/TGA)
¹¹B NMR (Lösungsmittel: CD₃CN; Referenz: Et₂O·BF₃), δ, ppm: -42.0 t, ¹*J*_{H,B} = 95 Hz.
¹H{¹¹B} NMR(Lösungsmittel: CD₃CN; Referenz: TMS), δ, ppm: 8.56 br.s (1 H, CH); 7.45 d,d (1H, CH), ³*J*_{H,H} = 1.8 Hz; 7.39 d,d (1 H, CH), ³*J*_{H,H} = 1.7 Hz; 4.20 q (2H, CH₂), ³*J*_{H,H} = 7.3 Hz; 3.86 s (3H, CH₃); 1.48 t (3H, CH₃), ³*J*_{H,H} = 7.3; 0.93 br. s (2H, BH₂).

### Beispiel 4. 1-Butyl-1-methylpyrrolidinium Dicyanodihydridoborat - BMPL [BH₂(CN)₂]

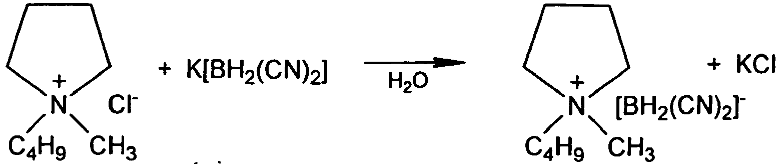

13.9 (134 mMol) g Kaliumdicyanodihydridoborat, K[BH₂(CN)₂] und 23.8 g (134 mMol) 1-Butyl-1-methylpyrrolidinium Chlorid, [BMPL]CI werden in je 20 mL Wasser gelöst und gemischt. Das Produkt, 1-Butyl-1-methylpyrrolidinium Dicyanodihydridoborat, [BMPL][BH₂(CN)₂] wird mit 100+100+50 mL CH₂Cl₂ extrahiert. Die vereinten organischen Phase werden mit 100 mL Wasser gewaschen, mit Na₂SO₄ getrocknet und das Lösungsmittel wird abdestilliert. [BMPL][BH₂(CN)₂] wird im Vakuum unter Rühren bei ca. 50 °C zwei Tage getrocknet. Die Ausbeute von 1-Butyl-1-methylpyrrolidinium Dicyanodihydridoborat ist 23,0 g (111 mmol, 83%). Chloridgehalt: 21 ppm;
Viskosität: 23.6 mPa·s (20° C).
¹¹B NMR (Lösungsmittel: CD₃CN; Referenz: Et₂O·BF₃), δ, ppm: -42.0 t, ¹*J*_{H,B} = 94 Hz.
¹H{¹¹B} NMR(Lösungsmittel: CD₃CN; Referenz: TMS), δ, ppm: 3.45 m (4H, 2CH₂,); 3.27 m (2H, CH₂); 2.99 s (3H, CH₃); 2.19 m (4H, 2CH₂); 1.75 m (2H, CH₂); 1.40 m (2H, CH₂); 0.98 t (3H, CH₃), ³*J*_{H,H} = 7.3 Hz; 1.01 s (2H,BH₂).

### Beispiel 5. N,N,N-Tributyl-N-methylammonium Dicyanodihydridoborat - [(n-C₄H₉)₃CH₃N][BH₂(CN)₂]

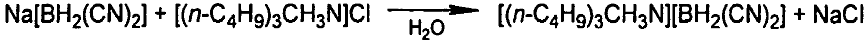

6.68 g (76 mMol) Natriumdicyanodihydridoborat, Na[BH₂(CN)₂] und 17.98 g (76 mMol) *N,N,N*-Tributyl-*N*-methylammonium Chlorid, [(*n*-C₄H₉)₃CH₃N]Cl werden in je 20 mL Wasser gelöst und gemischt. Das Produkt, *N,N,N-*Tributyl-*N*-methylammonium Dicyanodihydridoborat, [(*n-*C₄H₉)₃CH₃N][BH₂(CN)₂] wird mit 100+50+50 mL CH₂Cl₂ extrahiert. Die vereinten organischen Phasen werden mit 100 mL Wasser gewaschen, mit Na₂SO₄ getrocknet und das Lösungsmittel abdestilliert. [(*n-*C₄H₉)₃CH₃N][BH₂(CN)₂] wird im Vakuum unter Rühren bei ca. 50 °C zwei Tage getrocknet. Die Ausbeute von Tributylmethylammonium Dicyanodihydridoborat ist 20,0 g (75 mmol, 99%).
Wassergehalt: 17 ppm; Chloridgehalt: < 5 ppm;
Viskosität: 158 mPa·s (20° C).
Zersetzungstemperatur (onset): ca. 275 °C (DSC/TGA) ¹H{11B}-NMR(Lösungsmittel: CD₃CN; Referenz: TMS): δ, ppm = 0.97 t (3CH₃, 9H), ³J_{H,H} = 7.5 Hz; 1.02 s (2H, BH₂); 1.38 m (3CH₂, 6H); 1.62-1.73 m (3CH₂, 6H); 2.94 s (CH₃, 3H), 3.19 m, (3CH₂, 6H).

¹¹B-NMR (Lösungsmittel: CD₃CN; Referenz: Et₂O·BF₃): δ, ppm = -41.8 t, ¹J_{B,H} = 94 Hz.

### Beispiel 6. Tetrabutylammonium Dicyanodihydridoborat - [(n-C₄H₉)₄N][BH₂(CN)₂]

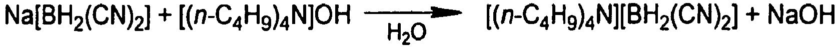

Analog zu Beispiel 5 werden 5.72 g (65 mMol)
Natriumdicyanodihydridoborat, Na[BH₂(CN)₂] mit 45 mL 40% wässriger Tetrabutylammonium Hydroxid, [(*n*-C₄H₉)₄N]OH gemischt und entsprechend aufgearbeitet. Die Ausbeute von Tetrabutylammonium Dicyanodihydridoborat ist 19,0 g (62 mmol, 95%).
Das Produkt wurde Mittels NMR Spektren und X-Ray Analyse charakterisiert.
Wassergehalt: 360 ppm; Chloridgehalt: 19 ppm;
Schmelzpunkt: 55 °C
Zersetzungstemperatur (onset): ca. 275 °C (DSC/TGA)
X-Ray Struktur, [(*n*-C₄H₉)₄N][BH₂(CN)₂]: a=9.4272(3), b=14.5252(4), c=15.3664(5) Å, α=90, β=97.058(3), γ=90 °, V=2088.20, Z = 4, P2₁/n, T = 110 K.
¹H{¹¹B}-NMR (Lösungsmittel: Aceton-D₆; Referenz: TMS): δ, ppm = 1.00 t (4CH₃, 12H), ³J_{H,H} = 7.5 Hz; 1.11 s (2H, BH₂); 1.45 m (4CH₂, 8H); 1.82 m (4CH₂, 8H); 3.42 m, (4CH₂, 8H).
¹¹B-NMR (Lösungsmittel: Aceton-D₆; Referenz: Et₂O-BF₃): δ, ppm = -41.8 t, ¹J_{B,H} = 94 Hz.

### Beispiel 7. Tetraethylammonium Dicyanodihydridoborat - [(C₂H₅)₄N][BH₂(CN)₂]

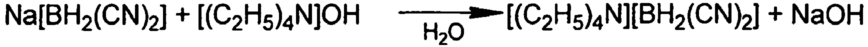

### Analog zu Beispiel 5 werden 9.0 g (103 mMol)

Natriumdicyanodihydridoborat, Na[BH₂(CN)₂] mit 79.5 mL 20% wässrige Tetraethylammonium Hydroxid, [(C₂H₅)₄N]OH gemischt und entsprechend aufgearbeitet. Die Ausbeute von Tetraethylammonium Dicyanodihydridoborat ist 16.0 g (82 mmol, 80%).
Wassergehalt: 192 ppm; Chloridgehalt: 30 ppm;
Schmelzpunkt: 43 °C
Zersetzungstemperatur (onset): 267 °C (DSC/TGA)
¹H{¹¹B}-NMR (Lösungsmittel: Aceton-D₆; Referenz: TMS): δ, ppm = 1.37 t,t (4CH₃, 12H), ³J_{H,H} = 7.2 Hz, ³J_{H,N} = 1.9 Hz; 1.07 s (2H, BH₂); 3.44 q (4CH₂, 8H), ³J_{H,H} = 7.2 Hz.
¹¹B-NMR (Lösungsmittel: Aceton-D₆; Referenz: Et₂O-BF₃): δ, ppm = -41.7 t, ¹J_{B,H} = 94 Hz.

### Beispiel 8. Tetrabutylphosphonium Dicyanodihydridoborat - [(n-C₄H₉)₄P][BH₂(CN)₂]

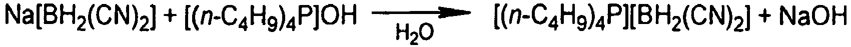

Analog zu Beispiel 5 werden 5.43 g (62 mMol)
Natriumdicyanodihydridoborat, Na[BH₂(CN)₂] mit 45 mL 40% wässrige Tetrabutylphosphonium Hydroxid, [(*n*-C₄H₉)₄P]OH gemischt und entsprechend aufgearbeitet. [(*n*-C₄H₉)₄P][BH₂(CN)₂] wird im Vakuum unter Rühren bei ca. 60 °C zwei Tage getrocknet. Die Ausbeute von Tetrabutylphosphonium Dicyanodihydridoborat ist 19,0 g (59 mmol, 95%). Wassergehalt: 372 ppm; Chloridgehalt: 16 ppm;
Schmelzpunkt: 42 °C
Zersetzungstemperatur (onset): 361 °C (DSC/TGA)
¹H{¹¹B}-NMR (Lösungsmittel: Aceton-D₆; Referenz: TMS): δ, ppm = 0.98 t (4CH₃, 12H), ³J_{H,H} = 7.3 Hz; 1.11 br. s (2H, BH₂); 1.54 m (4CH₂, 8H); 1.65-1.76 m (4CH₂, 8H); 2.35-2.45 m, (4CH₂, 8H).
¹¹B-NMR (Lösungsmittel: Aceton-D₆; Referenz: Et₂O-BF₃): δ, ppm = -41.7 t, ¹J_{B,H} = 94 Hz.

### Beispiel 9: 1-Butyl-3-methylpyridinium Dicyanodihydridoborat - [BMPy] [BH₂(CN)₂]

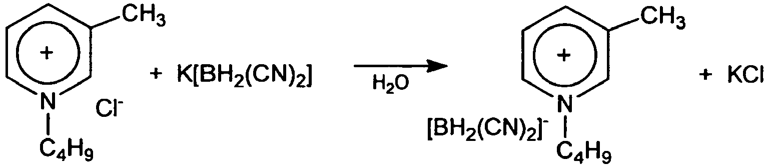

4.09 g (46.6 mmol) Natriumdicyanodihydridoborat, Na[BH₂(CN)₂] und 8.63 g (46.5 mmol) 1-Butyl-3-methylpyridinium Chlorid, [BMPy]Cl werden in je 20 mL Wasser gelöst und gemischt. Das Produkt, 1-Butyl-3-methylpyridinium Dicyanodihydridoborat, [BMPy][BH₂(CN)₂] wird mit 100+100+50 mL CH₂Cl₂ extrahiert. Die vereinten organischen Phasen werden mit 50+50 mL Wasser gewaschen, mit Na₂SO₄ getrocknet und das Lösungsmittel abdestilliert. [BMPy][BH₂(CN)₂] wird im Vakuum unter Rühren bei ca. 40 °C ein Tag getrocknet. Die Ausbeute von1-Butyl-3-methylpyridinium Dicyanodihydridoborat ist 9,0 g (41.8 mol, 90%).
¹H{¹¹B}-NMR (Lösungsmittel: Aceton-D₆; Referenz: TMS): δ, ppm = 0.97 t (CH₃, 3H), ³J_{H,H} = 7.5 Hz; 1.02 s (2H, BH₂); 1.44 m (CH₂, 2H); 2.08 m (CH₂, 2H); 2.63 s (CH₃, 3H), 4.71 t (CH₂, 2H), ³J_{H,H} = 7.6 Hz; 8.08 d,d (CH, 1 H),
³J_{H,H} = 7.0 Hz; 8.50 d (CH, 1H), ³J_{H,H} = 8.1 Hz; 8.88 d (CH, 1H), ³J_{H,H} = 6.1 Hz; 8.95 s (CH, 1 H).
¹¹B{¹H}-NMR (Lösungsmittel: Aceton-D₆; Referenz: Et₂O·BF₃): δ, ppm = - 41.7 s

## Patentansprüche

1. Verfahren zur Herstellung von Verbindungen der Formel I
Me⁺ [BH₂(CN)₂] I,
wobei Me⁺ ein Lithium-, Kalium-, Natrium-, Cäsium- oder Rubidium-Kation ist,
durch Reaktion eines Salzes der Formel II oder der Formel III
Me⁺ [BH₄]⁻ II,
Me⁺ [BH₃(CN)]⁻ III,
wobei
Me⁺ eine zuvor angegebene Bedeutung hat, mit einem Trialkylsilylcyanid, wobei die Alkylgruppe des Trialkylsilylcyanids jeweils unabhängig voneinander eine lineare oder verzweigte Alkylgruppe mit 1 bis 4 C-Atomen bedeutet.

2. Verfahren nach Anspruch 1, **dadurch gekennzeichnet, dass** die Reaktion bei Temperaturen zwischen 10°C und 200°C stattfindet.

3. Verfahren nach Anspruch 1 oder 2, **dadurch gekennzeichnet, dass** die Reaktion ohne Lösungsmittel stattfindet.

4. Verfahren nach einem oder mehreren der Ansprüche 1 bis 3, **dadurch gekennzeichnet, dass** dass das Trialkylsilylcyanid in situ aus einem Alkalimetallcyanid und einem Trialkylsilylchlorid in Anwesenheit von einem Alkalimetalliodid und gegebenenfalls Iod hergestellt wird.

5. Verfahren nach einem oder mehreren der Ansprüche 1 bis 4, **dadurch gekennzeichnet, dass** die Verbindungen der Formel I mit einer Verbindung der Formel IV
KtA IV
umgesetzt wird, in der
Kt die Bedeutung eines organischen Kations oder eines Metallkations besitzt, wobei das Kation Kt nicht dem eingesetzten Kation Me⁺ der Verbindung der Formel I entspricht und
das Anion A F⁻, Cl⁻, Br⁻, I⁻, OH⁻, [HF₂]⁻, [CN]⁻, [SCN]⁻, IR₁COO]⁻, [R₁OC(O)O]⁻, [R₁SO₃]⁻, [R₂COO]⁻, [R₂SO₃]⁻, [R₁OSO₃]⁻, [PF₆]⁻, [BF₄]⁻, [HSO₄]¹⁻, [NO₃]⁻, [(R₂)₂P(O)O]⁻, [R₂P(O)O₂]²⁻, [(R¹O)₂P(O)O]⁻, [(R₁O)P(O)O₂]²⁻, [(R₁O)R₁P(O)O]⁻, Tosylat, Malonat, das mit geradkettigen oder verzweigten Alkylgruppen mit 1 bis 4 C-Atomen substituiert sein kann, [HOCO₂]⁻ oder [CO₃]²⁻ bedeutet,
wobei R₁ jeweils unabhängig voneinander eine geradkettige oder verzweigte Alkylgruppe mit 1 bis 12 C-Atomen bedeutet und
R₂ jeweils unabhängig voneinander eine geradkettige oder verzweigte perfluorierte Alkylgruppe mit 1 bis 12 C-Atomen bedeutet und wobei in der Formel des Salzes KtA die Elektroneutralität berücksichtigt wird.

6. Verfahren nach Anspruch 5, **dadurch gekennzeichnet dass** Kt ein Oxoniumkation der Formel [(R°)₃O]⁺ (1)
oder ein Sulfoniumkation der Formel [(R°)₃S]⁺ (2),
wobei R° jeweils unabhängig voneinander eine geradkettige oder verzweigte Alkylgruppe mit 1-8 C-Atomen, unsubstituiertes Phenyl, durch R¹*, OR', N(R')₂, CN oder Halogen substituiertes Phenyl oder, beschränkt auf Sulfoniumkationen der Formel (2), (R"')₂N bedeutet, wobei R' jeweils unabhängig voneinander H, nicht, teilweise fluoriertes oder perfluoriertes lineares oder verzweigtes C₁- bis C₁₈-Alkyl, gesättigtes C₃- bis C₇-Cycloalkyl, unsubstituiertes oder substituiertes Phenyl bedeutet, R¹* jeweils unabhängig voneinander nicht, teilweise fluoriertes oder perfluoriertes lineares oder verzweigtes C₁- bis C₁₈-Alkyl, gesättigtes C₃- bis C₇-Cycloalkyl, unsubstituiertes oder substituiertes Phenyl bedeutet und
R'" jeweils unabhängig voneinander lineares oder verzweigtes Alkyl mit 1 bis 6 C-Atomen bedeutet,
oder ein Ammoniumkation der Formel (3),
[NR₄]⁺ (3),
wobei
R jeweils unabhängig voneinander
H, OR', N(R')₂ bedeutet, mit der Maßgabe, dass maximal ein Substituent R in Formel (3) OR' oder N(R')₂ ist,
geradkettiges oder verzweigtes Alkyl mit 1-20 C-Atomen bedeutet, geradkettiges oder verzweigtes Alkenyl mit 2-20 C-Atomen und einer oder mehreren Doppelbindungen bedeutet,
geradkettiges oder verzweigtes Alkinyl mit 2-20 C-Atomen und einer oder mehreren Dreifachbindungen bedeutet,
gesättigtes, teilweise oder vollständig ungesättigtes Cycloalkyl mit 3-7 C-Atomen, das mit geradkettigen oder verzweigten Alkylgruppen mit 1-6 C-Atomen substituiert sein kann, bedeutet,
wobei ein oder zwei Substituenten R vollständig mit Halogenen, insbesondere -F und/oder -Cl substituiert sein können oder wobei ein oder mehrere Substituenten R teilweise mit Halogenen, insbesondere - F und/oder -Cl, und/oder mit -OH, -OR', -CN, -N(R')₂ , -C(O)OH,-C(O)OR', -C(O)R', -C(O)N(R')₂, -SO₂N(R')₂, -C(O)X, -SO₂OH, -SO₂X, - NO₂, -SR', -S(O)R', -SO₂R' substituiert sein können,
und wobei ein oder zwei nicht benachbarte und nicht α-ständige Kohlenstoffatome des R durch Atome und/oder Atomgruppierungen ausgewählt aus der Gruppe -O-, -S-, -S(O)-, -SO₂-, -SO₂O-, -C(O)-, - C(O)O-, -N⁺(R'₂)-, -P(O)R'O-, -C(O)NR'-, -SO₂NR'-, -OP(O)R'O-, -P(O)(N(R')₂)NR'-, -P(R')₂=N- oder -P(O)R'- ersetzt sein können, wobei R' jeweils unabhängig voneinander H, nicht, teilweise fluoriertes oder perfluoriertes, lineares oder verzweigtes C₁- bis C₁₈-Alkyl, gesättigtes C₃- bis C₇-Cycloalkyl, unsubstituiertes oder substituiertes Phenyl bedeutet und X jeweils unabhängig voneinander Halogen bedeutet,
oder ein Phosphoniumkation der Formel (4),
[P(R²)₄]⁺ (4),
wobei
R² jeweils unabhängig voneinander
H, OR' oder N(R')₂ bedeutet,
geradkettiges oder verzweigtes Alkyl mit 1-20 C-Atomen bedeutet, geradkettiges oder verzweigtes Alkenyl mit 2-20 C-Atomen und einer oder mehreren Doppelbindungen bedeutet,
geradkettiges oder verzweigtes Alkinyl mit 2-20 C-Atomen und einer oder mehreren Dreifachbindungen bedeutet,
gesättigtes, teilweise oder vollständig ungesättigtes Cycloalkyl mit 3-7 C-Atomen, das mit geradkettigen oder verzweigten Alkylgruppen mit 1-6 C-Atomen substituiert sein kann, bedeutet,
wobei ein oder zwei Substituenten R² vollständig mit Halogenen, insbesondere -F und/oder -Cl substituiert sein können oder wobei ein oder mehrere Substituenten R² teilweise mit Halogenen, insbesondere - F und/oder -Cl, und/oder mit -OH, -OR', -CN, -N(R')₂ , -C(O)OH, - C(O)OR', -C(O)R', -C(O)N(R')₂, -SO₂N(R')₂, -C(O)X, -SO₂OH, -SO₂X, - NO₂, -SR', -S(O)R', -SO₂R' substituiert sein können,
und wobei ein oder zwei nicht benachbarte und nicht α-ständige Kohlenstoffatome des R² durch Atome und/oder Atomgruppierungen ausgewählt aus der Gruppe -O-, -S-, -S(O)-, -SO₂-, -SO₂O-, -C(O)-, - C(O)O-, -N⁺(R'₂)-, -P(O)R'O-, -C(O)NR'-, -SO₂NR'-, -OP(O)R'O-, -P(O)(N(R')₂)NR'-, -P(R')₂=N- oder -P(O)R'- ersetzt sein können, wobei R' jeweils unabhängig voneinander H, nicht, teilweise fluoriertes oder perfluoriertes, lineares oder verzweigtes C₁- bis C₁₈-Alkyl, gesättigtes C₃- bis C₇-Cycloalkyl, unsubstituiertes oder substituiertes Phenyl bedeutet und X jeweils unabhängig voneinander Halogen bedeutet,
oder ein Uroniumkation der Formel (5),
[C(NR³R⁴)(OR⁵)(NR⁶R⁷)]⁺ (5),
oder dass Kt ein Thiouroniumkation der Formel (6) ist,
[C(NR³R⁴)(SR⁵)(NR⁶R⁷)]⁺ (6),
wobei
R³ bis R⁷ jeweils unabhängig voneinander
H, wobei H für R⁵ ausgeschlossen wird, bedeuten,
geradkettiges oder verzweigtes Alkyl mit 1 bis 20 C-Atomen bedeuten, geradkettiges oder verzweigtes Alkenyl mit 2-20 C-Atomen und einer oder mehreren Doppelbindungen bedeuten,
geradkettiges oder verzweigtes Alkinyl mit 2-20 C-Atomen und einer oder mehreren Dreifachbindungen bedeuten,
gesättigtes, teilweise oder vollständig ungesättigtes Cycloalkyl mit 3-7 C-Atomen, das mit geradkettigen oder verzweigten Alkylgruppen mit 1-6 C-Atomen substituiert sein kann, bedeuten,
wobei ein oder zwei der Substituenten R³ bis R⁷ vollständig mit Halogenen, insbesondere -F und/oder -Cl, und einer oder mehrere der Substituenten R³ bis R⁷ teilweise mit Halogenen, insbesondere -F und/oder -Cl, und/oder -OH, -OR', -N(R')₂, -CN, -C(O)OH, -C(O)OR', - C(O)R', -C(O)N(R')₂, -SO₂NR'₂, -C(O)X, -SO₂OH, -SO₂X, -SR', -S(O)R', -SO₂R', -NO₂ substituiert sein können und wobei ein oder zwei nicht benachbarte und nicht α-ständige Kohlenstoffatome von R³ bis R⁷ durch Atome und/oder Atomgruppierungen ausgewählt aus der Gruppe -O-, - S-, -S(O)-, -SO₂-, -SO₂O-, -C(O)-, -C(O)O-, -N⁺(R'₂)-, -P(0)R'0-, - C(O)NR'-, -SO₂NR'-, -OP(O)R'O-, -P(O)(N(R')₂)NR'-, -P(R')₂=N- oder -P(O)R'- ersetzt sein können, wobei R' jeweils unabhängig voneinander H, nicht, teilweise fluoriertes oder perfluoriertes, lineares oder verzweigtes C₁- bis C₁₈-Alkyl, gesättigtes C₃- bis C₇-Cycloalkyl, unsubstituiertes oder substituiertes Phenyl bedeutet und X jeweils unabhängig voneinander Halogen bedeutet,
oder ein Guanidiniumkation der Formel (7),
[C(NR⁸R⁹)(NR¹⁰R¹¹)(NR¹²R¹³)]⁺ (7),
wobei
R⁸ bis R¹³ jeweils unabhängig voneinander
H, -CN, N(R')₂, -OR' bedeuten,
geradkettiges oder verzweigtes Alkyl mit 1 bis 20 C-Atomen bedeuten, geradkettiges oder verzweigtes Alkenyl mit 2-20 C-Atomen und einer oder mehreren Doppelbindungen bedeuten,
geradkettiges oder verzweigtes Alkinyl mit 2-20 C-Atomen und einer oder mehreren Dreifachbindungen bedeuten,
gesättigtes, teilweise oder vollständig ungesättigtes Cycloalkyl mit 3-7 C-Atomen, das mit geradkettigen oder verzweigten Alkylgruppen mit 1-6 C-Atomen substituiert sein kann, bedeuten,
wobei ein oder zwei der Substituenten R⁸ bis R¹³ vollständig mit Halogenen, insbesondere -F und/oder -Cl, und einer oder mehrere der Substituenten R⁸ bis R¹³ teilweise mit Halogenen, insbesondere -F und/oder -Cl, und/oder -OH, -OR', -N(R')₂, -CN, -C(O)OH, -C(O)OR', - C(O)R', -C(O)N(R')₂, -SO₂N(R')₂, -C(O)X, -SO₂OH, -SO₂X, -SR', - S(O)R', -SO₂R',-NO₂ substituiert sein können und wobei ein oder zwei nicht benachbarte und nicht α-ständige Kohlenstoffatome von R⁸ bis R¹³ durch Atome und/oder Atomgruppierungen ausgewählt aus der Gruppe -O-, -S-, -S(O)-, -SO₂-, -SO₂O-, -C(O)-, -C(O)O-, -N⁺(R'₂)-, -P(O)R'O-, - C(O)NR'-, -SO₂NR'-, -OP(O)R'O-, -P(O)(N(R')₂)NR'-, -P(R')₂=N- oder -P(O)R'- ersetzt sein können, wobei R' jeweils unabhängig voneinander H, nicht, teilweise fluoriertes oder perfluoriertes, lineares oder verzweigtes C₁- bis C₁₈-Alkyl, gesättigtes C₃- bis C₇-Cycloalkyl, unsubstituiertes oder substituiertes Phenyl bedeutet und X jeweils unabhängig voneinander Halogen bedeutet,
oder ein heterocyclisches Kation der Formel (8),
[HetN]^{z+} (8),
wobei
HetN^{z+} ein heterocyclisches Kation ausgewählt aus der Gruppe 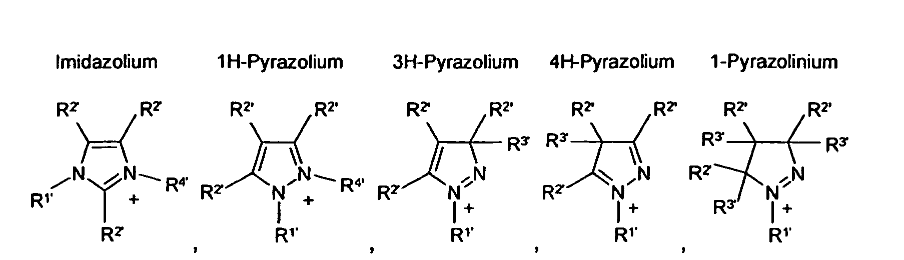 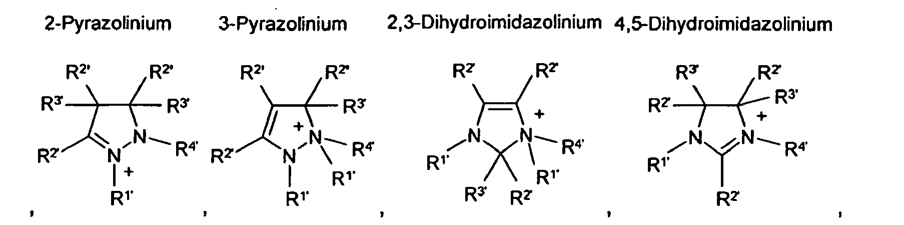 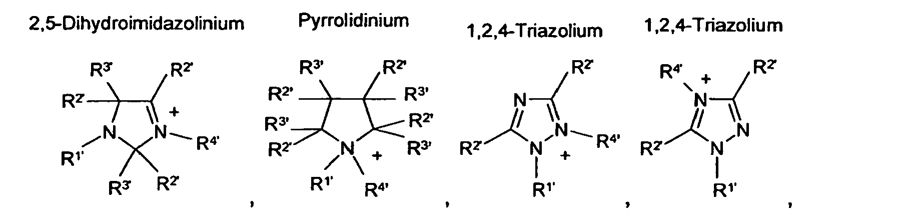 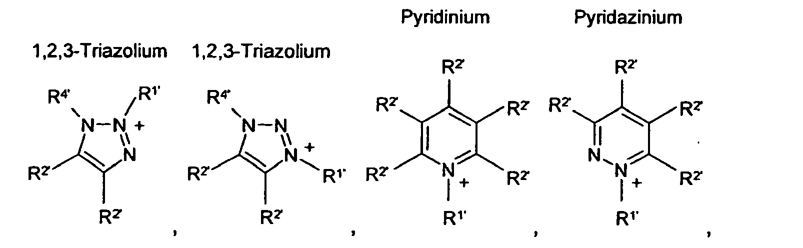 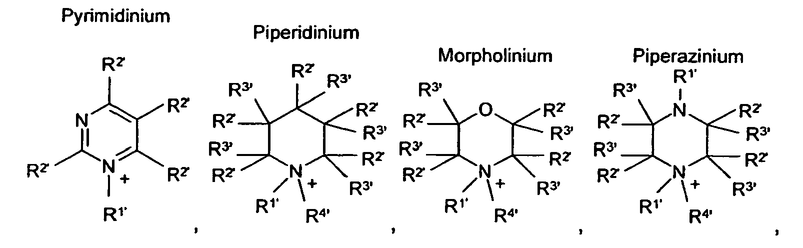 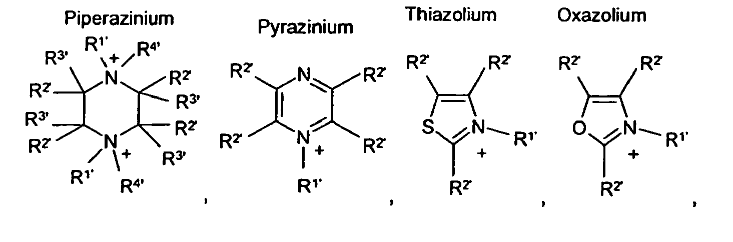 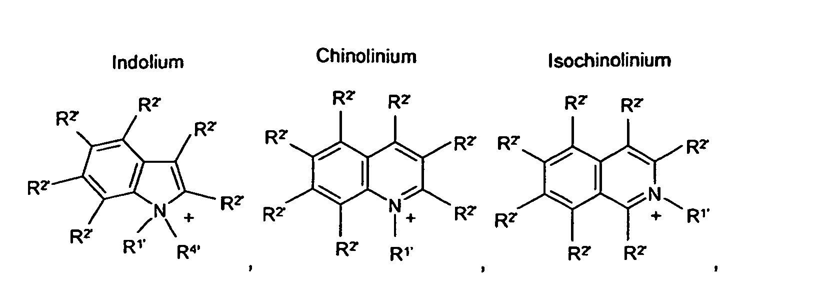 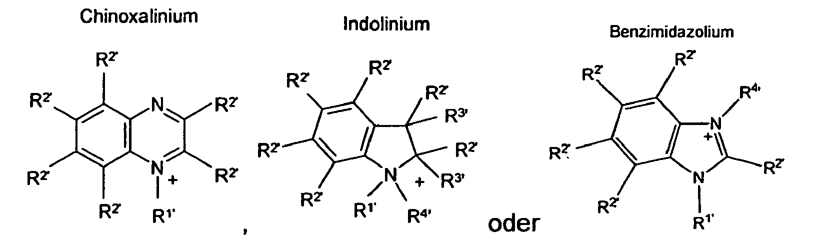
bedeutet, wobei die Substituenten
R¹' bis R⁴' jeweils unabhängig voneinander
H bedeuten, mit der Maßgabe dass nicht R^{1'} und R^{4'} gemeinsam H sind, geradkettiges oder verzweigtes Alkyl mit 1-20 C-Atomen bedeuten, geradkettiges oder verzweigtes Alkenyl mit 2-20 C-Atomen und einer oder mehreren Doppelbindungen bedeuten,
geradkettiges oder verzweigtes Alkinyl mit 2-20 C-Atomen und einer oder mehreren Dreifachbindungen bedeuten,
gesättigtes, teilweise oder vollständig ungesättigtes Cycloalkyl mit 3-7 C-Atomen, das mit geradkettigen oder verzweigten Alkylgruppen mit 1-6 C-Atomen substituiert sein kann, bedeuten,
gesättigtes, teilweise oder vollständig ungesättigtes Heteroaryl, Heteroaryl-C₁-C₆-alkyl oder Aryl-C₁-C₆-alkyl bedeuten und
R^{2'} zusätzlich F, Cl, Br, I, -CN, -OR', -N(R')₂, -P(O)R'₂, -P(O)(OR')₂, - P(O)(N(R')₂)₂, -C(O)R', -C(O)OR', -C(O)X, -C(O)N(R')₂, -SO₂N(R')₂, - SO₂OH, -SO₂X, -SR', -S(O)R', -SO₂R' und/oder NO₂ bedeutet, mit der Maßgabe, dass dann jeweils unabhängig voneinander R¹', R³' und R⁴' H und/oder ein geradkettiges oder verzweigtes Alkyl mit 1-20 C-Atomen und/oder ein geradkettiges oder verzweigtes Alkenyl mit 2-20 C-Atomen und einer oder mehreren Doppelbindungen sind,
wobei die Substituenten R^{1'}, R^{2'}, R^{3'} und/oder R^{4'} zusammen auch ein Ringsystem bilden können,
wobei ein, zwei oder drei Substituenten R¹' bis R⁴' vollständig mit Halogenen, insbesondere -F und/oder -Cl, und ein oder mehrere Substituenten R¹' bis R⁴' teilweise mit Halogenen, insbesondere -F und/oder -Cl, und/oder -OH, -OR', -N(R')₂, -CN, -C(O)OH, -C(O)OR', - C(O)R', -C(O)N(R')₂, -SO₂N(R')₂, -C(O)X, -SO₂OH, -SO₂X, -SR',-S(O)R', -SO₂R', -NO₂, substituiert sein können, wobei jedoch R^{1'} und R^{4'} nicht gleichzeitig vollständig mit Halogenen substituiert sein dürfen, und wobei ein oder zwei nicht benachbarte und nicht am Heteroatom gebundene Kohlenstoffatome der Substituenten R¹' bis R⁴', durch Atome und/oder Atomgruppierungen ausgewählt aus -O-, -S-, -S(O)-,-SO₂-, -SO₂O-, -C(O)-, -C(O)O-, -N⁺(R'₂)-, -P(O)R'O-, -C(O)NR'-, -SO₂NR'-, -OP(O)R'O-, -P(O)(N(R')₂)NR'-, -P(R')₂=N- oder -P(O)R'-ersetzt sein können, wobei R' jeweils unabhängig voneinander H, nicht, teilweise fluoriertes oder perfluoriertes, lineares oder verzweigtes C₁-bis C₁₈-Alkyl, gesättigtes C₃- bis C₇-Cycloalkyl, unsubstituiertes oder substituiertes Phenyl bedeutet und X jeweils unabhängig voneinander Halogen bedeutet,
Halogen F, Cl, Br oder I bedeutet,
oder ein Tritylium-Kation bedeutet,
oder dass Kt einem Metallkation der Gruppen 1 bis 12 des Periodensystems entspricht, ausgewählt aus Alkalimetallkationen, Ag⁺, Mg²⁺, Cu⁺, Cu²⁺, Zn²⁺,Ca²⁺, Y⁺³, Yb⁺³, La⁺³, Sc⁺³, Ce⁺³, Nd⁺³, Tb⁺³, Sm⁺³ oder komplexe (Liganden enthaltende) Metallkationen, die Seltenerd-, Übergangs- oder Edelmetalle wie Rhodium, Ruthenium, Iridium, Palladium, Platin, Osmium, Kobalt, Nickel, Eisen, Chrom, Molybdän, Wolfram, Vanadium, Titan, Zirconium, Hafnium, Thorium, Uran, Gold enthalten.

7. Verfahren nach Anspruch 5 oder 6, **dadurch gekennzeichnet dass** die Umsalzungsreaktion in einem organischen Lösungsmittel oder in Wasser durchgeführt wird.

## Claims

1. Process for the preparation of compounds of the formula I
Me⁺ [BH₂(CN)₂]⁻ I,
where Me⁺ is a lithium, potassium, sodium, caesium or rubidium cation, by reaction of a salt of the formula II or of the formula III
Me⁺ [BH₄]⁻ II,
Me⁺ [BH₃(CN)]⁻ III,
where
Me⁺ has a meaning indicated above, with a trialkylsilyl cyanide, where the alkyl group of the trialkylsilyl cyanide in each case, independently of one another, denotes a linear or branched alkyl group having 1 to 4 C atoms.

2. Process according to Claim 1, **characterised in that** the reaction is carried out at temperatures between 10°C and 200°C.

3. Process according to Claim 1 or 2, **characterised in that** the reaction is carried out without solvent.

4. Process according to one or more of Claims 1 to 3, **characterised in that** the trialkylsilyl cyanide is prepared in situ from an alkali-metal cyanide and a trialkylsilyl chloride in the presence of an alkali-metal iodide and optionally iodine.

5. Process according to one or more of Claims 1 to 4, **characterised in that** the compounds of the formula I are reacted with a compound of the formula IV
KtA IV
in which
Kt has the meaning of an organic cation or a metal cation, where the cation Kt does not correspond to the cation Me⁺ employed in the compound of the formula I and
the anion A denotes F⁻, Cl⁻, Br⁻, I⁻, OH⁻, [HF₂]⁻, [CN]⁻, [SCN]⁻, [R₁COO]⁻, [R₁OC(O)O] ⁻, [R₁SO₃]⁻, [R₂COO]⁻, [R₂SO₃]⁻, [R₁OSO₃]⁻, [PF₆]⁻, [BF₄]⁻, [HSO₄]¹⁻, [NO₃]⁻, [(R₂)₂P(O)O]⁻, [R₂P(O)O₂]²⁻, [(R₁O)₂P(O)O]⁻, [(R₁O)P(O)O₂]²⁻, [(R₁O)R₁P(O)O]⁻, tosylate, malonate, which may be substituted by straight-chain or branched alkyl groups having 1 to 4 C atoms, [HOCO₂]⁻ or [CO₃] ²⁻,
where R₁ in each case, independently of one another, denotes a straight-chain or branched alkyl group having 1 to 12 C atoms and R₂ in each case, independently of one another, denotes a straight-chain or branched perfluorinated alkyl group having 1 to 12 C atoms and where electroneutrality is taken into account in the formula of the salt KtA.

6. Process according to Claim 5, **characterised in that** Kt denotes an oxonium cation of the formula [(R^{o})₃O]⁺ (1)
or a sulfonium cation of the formula [(R^{o})₃S]⁺ (2),
where R^{o} in each case, independently of one another, denotes a straight-chain or branched alkyl group having 1-8 C atoms, unsubstituted phenyl, phenyl which is substituted by R^{1*}, OR', N(R')₂, CN or halogen, or, restricted to sulfonium cations of the formula (2), (R"')₂N, where R' in each case, independently of one another, denotes H, unfluorinated, partially fluorinated or perfluorinated linear or branched C₁-to C₁₈-alkyl, saturated C₃- to C₇-cycloalkyl, unsubstituted or substituted phenyl, R^{1*} in each case, independently of one another, denotes unfluorinated, partially fluorinated or perfluorinated linear or branched C₁-to C₁₈-alkyl, saturated C₃- to C₇-cycloalkyl, unsubstituted or substituted phenyl and
R'" in each case, independently of one another, denotes linear or branched alkyl having 1 to 6 C atoms,
or an ammonium cation of the formula (3),
[NR₄]⁺ (3),
where
R in each case, independently of one another, denotes H, OR', N(R')₂, with the proviso that a maximum of one substituent R in formula (3) is OR' or N(R')₂,
straight-chain or branched alkyl having 1-20 C atoms,
straight-chain or branched alkenyl having 2-20 C atoms and one or more double bonds,
straight-chain or branched alkynyl having 2-20 C atoms and one or more triple bonds,
saturated, partially or fully unsaturated cycloalkyl having 3-7 C atoms, which may be substituted by straight-chain or branched alkyl groups having 1-6 C atoms,
where one or two substituents R may be fully substituted by halogens, in particular -F and/or -Cl or where one or more substituents R may be partially substituted by halogens, in particular -F and/or -Cl, and/or by -OH, -OR', -CN, -N(R')₂, -C(O)OH, -C(O)OR', -C(O)R', -C(O)N(R')₂, -SO₂N(R')₂, -C(O)X, -SO₂OH, -SO₂X, -NO₂, -SR', -S(O)R', -SO₂R', and where one or two carbon atoms of the R which are not adjacent and are not in the α-position may be replaced by atoms and/or atom groups selected from the group -O-, -S-, -S(O)-, -SO₂-, -SO₂O-, -C(O)-, -C(O)O-, -N⁺(R'₂)-, -P(O)R'O-, -C(O)NR'-, -SO₂NR'-, -OP(O)R'O-, -P(O)(N(R')₂)NR'-, -P(R')₂=N- or -P(O)R'-, where R' in each case, independently of one another, denotes H, unfluorinated, partially fluorinated or perfluorinated, linear or branched C₁- to C₁₈-alkyl, saturated C₃- to C₇-cycloalkyl, unsubstituted or substituted phenyl and X in each case, independently of one another, denotes halogen,
or a phosphonium cation of the formula (4),
[P(R²)₄]⁺ (4),
where
R² in each case, independently of one another, denotes H, OR' or N(R')₂,
straight-chain or branched alkyl having 1-20 C atoms,
straight-chain or branched alkenyl having 2-20 C atoms and one or more double bonds,
straight-chain or branched alkynyl having 2-20 C atoms and one or more triple bonds,
saturated, partially or fully unsaturated cycloalkyl having 3-7 C atoms, which may be substituted by straight-chain or branched alkyl groups having 1-6 C atoms,
where one or two substituents R² may be fully substituted by halogens, in particular -F and/or -Cl or where one or more substituents R² may be partially substituted by halogens, in particular -F and/or -Cl, and/or by -OH, -OR', -CN, -N(R')₂, -C(O)OH, -C(O)OR', -C(O)R', -C(O)N(R')₂, -SO₂N(R')₂, -C(O)X, -SO₂OH, -SO₂X, -NO₂, -SR', -S(O)R', -SO₂R', and where one or two carbon atoms of the R² which are not adjacent and are not in the α-position may be replaced by atoms and/or atom groups selected from the group -0-, -S-, -S(O)-, -SO₂-, -SO₂O-, -C(O)-, -C(O)O-, -N⁺(R'₂)-, -P(O)R'O-, -C(O)NR'-, -SO₂NR'-, -OP(O)R'O-, -P(O)(N(R')₂)NR'-, -P(R')₂=N- or -P(O)R'-, where R' in each case, independently of one another, denotes H, unfluorinated, partially fluorinated or perfluorinated, linear or branched C₁- to C₁₈-alkyl, saturated C₃- to C₇-cycloalkyl, unsubstituted or substituted phenyl and X in each case, independently of one another, denotes halogen,
or a uronium cation of the formula (5),
[C(NR³R⁴)(OR⁵)(NR⁶R⁷)]⁺ (5),
or **in that** Kt is a thiouronium cation of the formula (6),
[C(NR³R⁴)(SR⁵)(NR⁶R⁷)]⁺ (6),
where
R³ to R⁷ each, independently of one another, denote H, where H is excluded for R⁵,
straight-chain or branched alkyl having 1 to 20 C atoms,
straight-chain or branched alkenyl having 2-20 C atoms and one or more double bonds,
straight-chain or branched alkynyl having 2-20 C atoms and one or more triple bonds,
saturated, partially or fully unsaturated cycloalkyl having 3-7 C atoms, which may be substituted by straight-chain or branched alkyl groups having 1-6 C atoms,
where one or two of the substituents R³ to R⁷ may be fully substituted by halogens, in particular -F and/or -Cl, and one or more of the substituents R³ to R⁷ may be partially substituted by halogens, in particular -F and/or -Cl, and/or -OH, -OR', -N(R')₂, -CN, -C(O)OH, -C(O)OR', -C(O)R', -C(O)N(R')₂, -SO₂NR'₂, -C(O)X, -SO₂OH, -SO₂X, -SR', -S(O)R', -SO₂R', -NO₂ and where one or two carbon atoms of R³ to R⁷ which are not adjacent and are not in the α-position may be replaced by atoms and/or atom groups selected from the group -0-, -S-, -S(O)-, -SO₂-, -SO₂O-, -C(O)-, -C(O)O-, -N'(R'₂)-, -P(O)R'O-, -C(O)NR'-, -SO₂NR'-, -OP(O)R'O-, -P(O)(N(R')₂)NR'-, -P(R')₂=N- or -P(O)R'-, where R' in each case, independently of one another, denotes H, unfluorinated, partially fluorinated or perfluorinated, linear or branched C₁- to C₁₈-alkyl, saturated C₃- to C₇-cycloalkyl, unsubstituted or substituted phenyl and X in each case, independently of one another, denotes halogen,
or a guanidinium cation of the formula (7),
[C(NR⁸R⁹)(NR¹⁰R¹¹)(NR¹²R¹³)]⁺ (7),
where
R⁸ to R¹³ each, independently of one another, denote H, -CN, N(R')₂, -OR',
straight-chain or branched alkyl having 1 to 20 C atoms,
straight-chain or branched alkenyl having 2-20 C atoms and one or more double bonds,
straight-chain or branched alkynyl having 2-20 C atoms and one or more triple bonds,
saturated, partially or fully unsaturated cycloalkyl having 3-7 C atoms, which may be substituted by straight-chain or branched alkyl groups having 1-6 C atoms,
where one or two of the substituents R⁸ to R¹³ may be fully substituted by halogens, in particular -F and/or -Cl, and one or more of the substituents R⁸ to R¹³ may be partially substituted by halogens, in particular -F and/or -Cl, and/or -OH, -OR', -N(R')₂, -CN, -C(O)OH, -C(O)OR', -C(O)R', -C(O)N(R')₂, -SO₂N(R')₂, -C(O)X, -SO₂OH, -SO₂X, -SR', -S(O)R',-SO₂R', -NO₂ and where one or two carbon atoms of R⁸ to R¹³ which are not adjacent and are not in the α-position may be replaced by atoms and/or atom groups selected from the group -0-, -S-, -S(O)-, -SO₂-,-SO₂O-, -C(O)-, -C(O)O-, -N⁺(R'₂)-, -P(O)R'O-, -C(O)NR'-, -SO₂NR'-,-OP(O)R'O-, -P(O)(N(R')₂)NR'-, -P(R')₂=N- or -P(O)R'-, where R' in each case, independently of one another, denotes H, unfluorinated, partially fluorinated or perfluorinated, linear or branched C₁- to C₁₈-alkyl, saturated C₃- to C₇-cycloalkyl, unsubstituted or substituted phenyl and X in each case, independently of one another, denotes halogen,
or a heterocyclic cation of the formula (8),
[HetN]^{z+} (8),
where
HetN^{z+} denotes a heterocyclic cation selected from the group 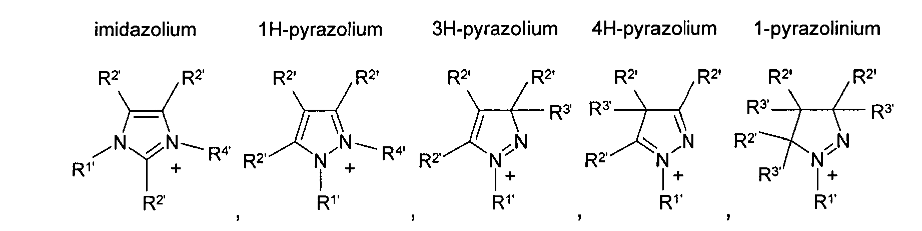 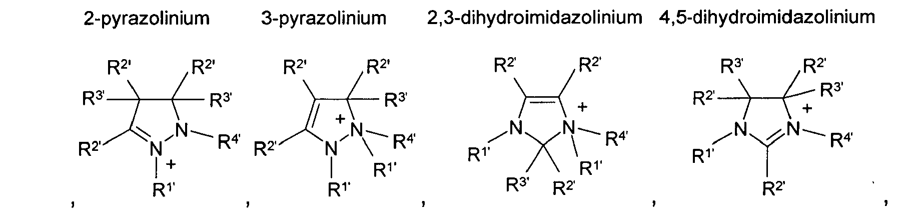 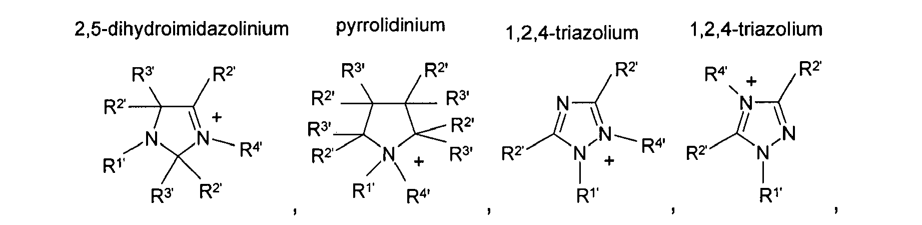 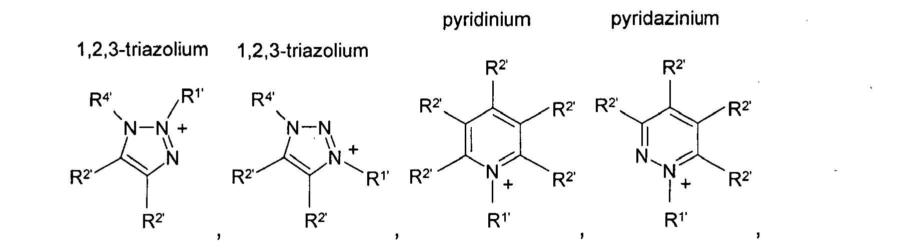 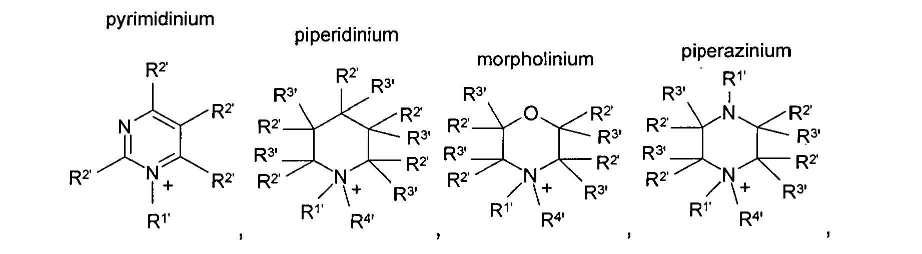 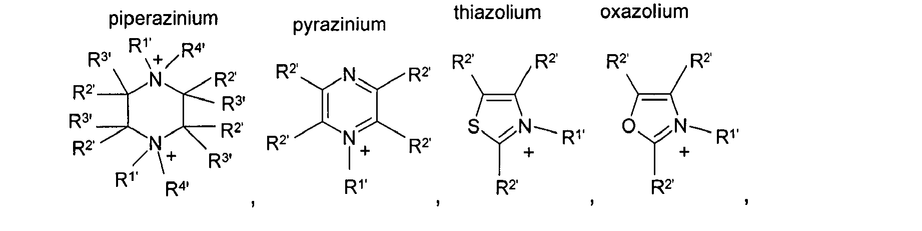 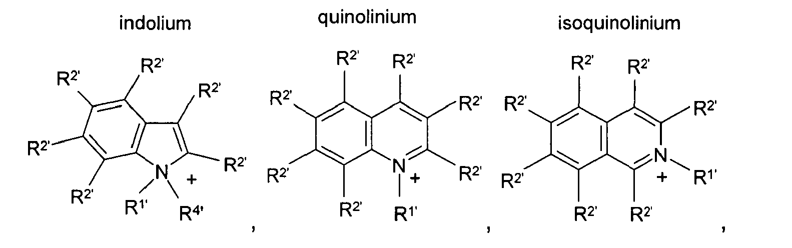 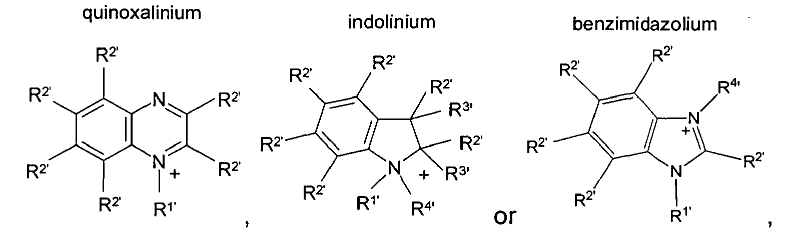
where the substituents
R^{1'} to R^{4'} each, independently of one another, denote H, with the proviso that R^{1'} and R^{4'} are not together H,
straight-chain or branched alkyl having 1-20 C atoms,
straight-chain or branched alkenyl having 2-20 C atoms and one or more double bonds,
straight-chain or branched alkynyl having 2-20 C atoms and one or more triple bonds,
saturated, partially or fully unsaturated cycloalkyl having 3-7 C atoms, which may be substituted by straight-chain or branched alkyl groups having 1-6 C atoms,
saturated, partially or fully unsaturated heteroaryl, heteroaryl-C₁-C₆-alkyl or aryl-C₁-C₆-alkyl and
R^{2'} additionally denotes F, Cl, Br, I, -CN, -OR', -N(R')₂, -P(O)R'₂, -P(O)(OR')₂, -P(O)(N(R')₂)₂, -C(O)R', -C(O)OR', -C(O)X, -C(O)N(R')₂, -SO₂N(R')₂, -SO₂OH, -SO₂X, -SR', -S(O)R', -SO₂R' and/or NO₂, with the proviso that R^{1'}, R^{3'} and R^{4'} are then each, independently of one another, H and/or a straight-chain or branched alkyl having 1-20 C atoms and/or a straight-chain or branched alkenyl having 2-20 C atoms and one or more double bonds,
where the substituents R^{1'}, R^{2'}, R^{3'} and/or R^{4'} together may also form a ring system,
where one, two or three substituents R^{1'} to R^{4'} may be fully substituted by halogens, in particular -F and/or -Cl, and one or more substituents R^{1'} to R^{4'} may be partially substituted by halogens, in particular -F and/or -Cl, and/or -OH, -OR', -N(R')₂, -CN, -C(O)OH, -C(O)OR', -C(O)R', -C(O)N(R')₂, -SO₂N(R')₂, -C(O)X, -SO₂OH, -SO₂X, -SR', -S(O)R', -SO₂R', -NO₂, but where R^{1'} and R^{4'} cannot simultaneously be fully substituted by halogens, and where one or two carbon atoms of the substituents R^{1'} to R^{4'} which are not adjacent and are not bonded to the heteroatom may be replaced by atoms and/or atom groups selected from -O-, -S-, -S(O)-, -SO₂-, -SO₂O-, -C(O)-, -C(O)O-, -N⁺(R'₂)-, -P(O)R'O-, -C(O)NR'-, -SO₂NR'-, -OP(O)R'O-, -P(O)(N(R')₂)NR'-, -P(R')₂=N- or -P(O)R'-, where R' in each case, independently of one another, denotes H, unfluorinated, partially fluorinated or perfluorinated, linear or branched C₁- to C₁₈-alkyl, saturated C₃- to C₇-cycloalkyl, unsubstituted or substituted phenyl and X in each case, independently of one another, denotes halogen, halogen denotes F, Cl, Br or I,
or a tritylium cation,
or **in that** Kt corresponds to a metal cation from groups 1 to 12 of the Periodic Table, selected from alkali-metal cations, Ag⁺, Mg²⁺, Cu⁺, Cu²⁺, Zn²⁺, Ca²⁺, Y⁺³, Yb⁺³, La⁺³, Sc⁺³, Ce⁺³, Nd⁺³, Tb⁺³, Sm⁺³ or complex (ligand-containing) metal cations which contain rare-earth, transition or noble metals, such as rhodium, ruthenium, iridium, palladium, platinum, osmium, cobalt, nickel, iron, chromium, molybdenum, tungsten, vanadium, titanium, zirconium, hafnium, thorium, uranium, gold.

7. Process according to Claim 5 or 6, **characterised in that** the salt-exchange reaction is carried out in an organic solvent or in water.

## Revendications

1. Procédé de préparation de composés de formule I
Me⁺ [BH₂(CN)₂]⁻ I,
dans laquelle Me⁺ est un cation lithium, potassium, sodium, césium ou rubidium,
par la réaction d'un sel de formule II ou de formule III
Me⁺ [BH₄]⁻ II,
Me⁺ [BH₃(CN)]⁻ III,
dans laquelle
Me⁺ revêt une signification indiquée ci-dessus, avec un cyanure de trialkylsilyle, où le groupement alkyle du cyanure de trialkylsilyle dans chaque cas, indépendamment les uns des autres, désigne un groupement alkyle linéaire ou ramifié ayant de 1 à 4 atomes de C.

2. Procédé selon la revendication 1, **caractérisé en ce que** la réaction est effectuée à des températures comprises entre 10°C et 200°C.

3. Procédé selon la revendication 1 ou 2, **caractérisé en ce que** la réaction est effectuée sans solvant.

4. Procédé selon l'une ou plusieurs parmi les revendications 1 à 3, **caractérisé en ce que** le cyanure de trialkylsilyle est préparé *in situ* à partir d'un cyanure de métal alcalin et d'un chlorure de trialkylsilyle en présence d'un iodure de métal alcalin et éventuellement d'iode.

5. Procédé selon l'une ou plusieurs parmi les revendications 1 à 4, **caractérisé en ce que** les composés de formule I sont réagis avec un composé de formule IV
KtA IV
dans laquelle
Kt revêt la signification d'un cation organique ou d'un cation métallique, où le cation Kt ne correspond pas au cation Me⁺ employé dans le composé de formule I et
l'anion A désigne F-, Cl⁻, Br-, I⁻, OH⁻, [HF₂]⁻, [CN]⁻, [SCN]⁻, [R¹COO]⁻, [R₁OC(O)O]⁻, [R₁SO₃]⁻, [R₂COO]⁻, [R₂SO₃]⁻, [R₁OSO₃]⁻, [PF₆]⁻, [BF₄]⁻, [HSO₄]¹⁻, [NO₃]⁻, [(R₂)₂P(O)O]⁻, [R₂P(O)O₂]²⁻, [(R₁O)₂P(O)O]⁻, [(R₁O)P(O)O₂]²⁻, [(R₁O)R₁P(O)O]⁻, tosylate, malonate, qui peut être substitué par des groupements alkyle à chaîne linéaire ou ramifiée ayant de 1 à 4 atomes de C, [HOCO₂]⁻ ou [CO₃]²⁻,
où R₁ dans chaque cas, indépendamment les uns des autres, désigne un groupement alkyle à chaîne linéaire ou ramifiée ayant de 1 à 12 atomes de C et
R₂ dans chaque cas, indépendamment les uns des autres, désigne un groupement alkyle perfluoré à chaîne linéaire ou ramifiée ayant de 1 à 12 atomes de C et où l'électroneutralité est prise en compte dans la formule du sel KtA.

6. Procédé selon la revendication 5, **caractérisé en ce que** Kt désigne un cation oxonium de formule [(R^{o})₃O]⁺ (1)
ou un cation sulfonium de formule [(R^{o})₃S]⁺ (2),
où R^{o} dans chaque cas, indépendamment les uns des autres, désigne un groupement alkyle à chaîne linéaire ou ramifiée ayant 1-8 atomes de C, phényle non substitué, phényle qui est substitué par R^{1*}, OR', N(R')₂, CN ou halogène, ou, restreint aux cations sulfonium de formule (2), (R"')₂N,
où R' dans chaque cas, indépendamment les uns des autres, désigne H, C₁- à C₁₈-alkyle non fluoré, partiellement fluoré ou perfluoré linéaire ou ramifié, C₃- à C₇-cycloalkyle saturé, phényle non substitué ou substitué, R^{1*} dans chaque cas, indépendamment les uns des autres, désigne C₁- à C₁₈-alkyle non fluoré, partiellement fluoré ou perfluoré linéaire ou ramifié, C₃- à C₇-cycloalkyle saturé, phényle non substitué ou substitué et
R"' dans chaque cas, indépendamment les uns des autres, désigne alkyle linéaire ou ramifié ayant de 1 à 6 atomes de C,
ou un cation ammonium de formule (3),
[NR₄]⁺ (3),
dans laquelle
R dans chaque cas, indépendamment les uns des autres, désigne H, OR', N(R')₂, à condition qu'un maximum d'un substituant R dans la formule (3) soit OR' ou N(R')₂,
alkyle à chaîne linéaire ou ramifiée ayant 1-20 atomes de C,
alcényle à chaîne linéaire ou ramifiée ayant 2-20 atomes de C et une ou plusieurs doubles liaisons,
alcynyle à chaîne linéaire ou ramifiée ayant 2-20 atomes de C et une ou plusieurs triples liaisons,
cycloalkyle saturé, partiellement ou totalement insaturé ayant 3-7 atomes de C, pouvant être substitué par des groupements alkyle à chaîne linéaire ou ramifiée ayant 1-6 atomes de C,
où un ou deux substituants R peuvent être totalement substitués par des halogènes, en particulier -F et/ou -Cl ou où un ou plusieurs substituants R peuvent être partiellement substitués par des halogènes, en particulier -F et/ou -Cl, et/ou par -OH, -OR', -CN, -N(R')₂, -C(O)OH, -C(O)OR', -C(O)R', -C(O)N(R')₂, -SO₂N(R')₂, -C(O)X, -SO₂OH, -SO₂X, -NO₂, -SR', -S(O)R', -SO₂R',
et où un ou deux atomes de carbone de R qui ne sont pas adjacents et ne sont pas en position α peuvent être remplacés par des atomes et/ou des groupes d'atomes choisis dans le groupe constitué par -O-, -S-, -S(O)-, -SO₂-, -SO₂O-, -C(O)-, -C(O)O-, -N⁺(R'₂)-, -P(O)R'O-, -C(O)NR'-, -SO₂NR'-, -OP(O)R'O-, -P(O)(N(R')₂)NR'-, -P(R')₂=N- ou -P(O)R'-, où R' dans chaque cas, indépendamment les uns des autres, désigne H, C₁-à C₁₈-alkyle non fluoré, partiellement fluoré ou perfluoré, linéaire ou ramifié, C₃- à C₇-cycloalkyle saturé, phényle non substitué ou substitué et X dans chaque cas, indépendamment les uns des autres, désigne halogène,
ou un cation phosphonium de formule (4),
[P(R²)₄]⁺ (4),
dans laquelle
R² dans chaque cas, indépendamment les uns des autres, désigne H, OR' ou N(R')₂,
alkyle à chaîne linéaire ou ramifiée ayant 1-20 atomes de C,
alcényle à chaîne linéaire ou ramifiée ayant 2-20 atomes de C et une ou plusieurs doubles liaisons,
alcynyle à chaîne linéaire ou ramifiée ayant 2-20 atomes de C et une ou plusieurs triples liaisons,
cycloalkyle saturé, partiellement ou totalement insaturé ayant 3-7 atomes de C, pouvant être substitué par des groupements alkyle à chaîne linéaire ou ramifiée ayant 1-6 atomes de C,
où un ou deux substituants R² peuvent être totalement substitués par des halogènes, en particulier -F et/ou -Cl ou où un ou plusieurs substituants R² peuvent être partiellement substitués par des halogènes, en particulier -F et/ou -Cl, et/ou par -OH, -OR', -CN, -N(R')₂, -C(O)OH, -C(O)OR', -C(O)R', -C(O)N(R')₂, -SO₂N(R')₂, -C(O)X, -SO₂OH, -SO₂X, -NO₂, -SR', -S(O)R', -SO₂R', et où un ou deux atomes de carbone de R² qui ne sont pas adjacents et ne sont pas en position α peuvent être remplacés par des atomes et/ou des groupes d'atomes choisis dans le groupe constitué par -O-, -S-, -S(O)-, -SO₂-, -SO₂O-, -C(O)-, -C(O)O-, -N⁺(R'₂)-, -P(O)R'O-, -C(O)NR'-, -SO₂NR'-, -OP(O)R'O-, -P(O)(N(R')₂)NR'-, -P(R')₂=N- ou -P(O)R'-, où R' dans chaque cas, indépendamment les uns des autres, désigne H, C₁-à C₁₈-alkyle non fluoré, partiellement fluoré ou perfluoré, linéaire ou ramifié, C₃- à C₇-cycloalkyle saturé, phényle non substitué ou substitué et X dans chaque cas, indépendamment les uns des autres, désigne halogène,
ou un cation uronium de formule (5),
[C(NR³R⁴)(OR⁵)(NR⁶R⁷)]⁺ (5),
ou **en ce que** Kt est un cation thiouronium de formule (6),
[C(NR³R⁴)(SR⁵)(NR⁶R⁷)]⁺ (6),
dans laquelle
R³ à R⁷ désignent chacun, indépendamment les uns des autres, H, où H est exclu pour R⁵,
alkyle à chaîne linéaire ou ramifiée ayant de 1 à 20 atomes de C, alcényle à chaîne linéaire ou ramifiée ayant 2-20 atomes de C et une ou plusieurs doubles liaisons,
alcynyle à chaîne linéaire ou ramifiée ayant 2-20 atomes de C et une ou plusieurs triples liaisons,
cycloalkyle saturé, partiellement ou totalement insaturé ayant 3-7 atomes de C, pouvant être substitué par des groupements alkyle à chaîne linéaire ou ramifiée ayant 1-6 atomes de C,
où un ou deux parmi les substituants R³ à R⁷ peuvent être totalement substitués par des halogènes, en particulier -F et/ou -Cl, et un ou plusieurs parmi les substituants R³ à R⁷ peuvent être partiellement substitués par des halogènes, en particulier -F et/ou -CI, et/ou -OH, -OR', -N(R')₂, -CN, -C(O)OH, -C(O)OR', -C(O)R', -C(O)N(R')₂, -SO₂NR'₂, -C(O)X, -SO₂OH, -SO₂X, -SR', -S(O)R', -SO₂R', -NO₂ et où un ou deux atomes de carbone de R³ à R⁷ qui ne sont pas adjacents et ne sont pas en position α peuvent être remplacés par des atomes et/ou des groupes d'atomes choisis dans le groupe constitué par -O-, -S-, -S(O)-, -SO₂-, -SO₂O-, -C(O)-, -C(O)O-, -N⁺(R'₂)-, -P(O)R'O-, -C(O)NR'-, -SO₂NR'-, -OP(O)R'O-, -P(O)(N(R')₂)NR'-, -P(R')₂=N- ou -P(O)R'-, où R' dans chaque cas, indépendamment les uns des autres, désigne H, C₁- à C₁₈-alkyle non fluoré, partiellement fluoré ou perfluoré, linéaire ou ramifié, C₃- à C₇-cycloalkyle saturé, phényle non substitué ou substitué et X dans chaque cas, indépendamment les uns des autres, désigne halogène,
ou un cation guanidinium de formule (7),
[C(NR⁸R⁹)(NR¹⁰R¹¹)(NR¹²R¹³)]⁺ (7),
dans laquelle
R⁸ à R¹³ désignent chacun, indépendamment les uns des autres, H, -CN, N(R')₂, -OR',
alkyle à chaîne linéaire ou ramifiée ayant de 1 à 20 atomes de C, alcényle à chaîne linéaire ou ramifiée ayant 2-20 atomes de C et une ou plusieurs doubles liaisons,
alcynyle à chaîne linéaire ou ramifiée ayant 2-20 atomes de C et une ou plusieurs triples liaisons,
cycloalkyle saturé, partiellement ou totalement insaturé ayant 3-7 atomes de C, pouvant être substitué par des groupements alkyle à chaîne linéaire ou ramifiée ayant 1-6 atomes de C,
où un ou deux parmi les substituants R⁸ à R¹³ peuvent être totalement substitués par des halogènes, en particulier -F et/ou -Cl, et un ou plusieurs parmi les substituants R⁸ à R¹³ peuvent être partiellement substitués par des halogènes, en particulier -F et/ou -Cl, et/ou -OH, -OR',-N(R')₂, -CN, -C(O)OH, -C(O)OR', -C(O)R', -C(O)N(R')₂, -SO₂N(R')₂,-C(O)X, -SO₂OH, -SO₂X, -SR', -S(O)R', -SO₂R', -NO₂ et où un ou deux atomes de carbone de R⁸ à R¹³ qui ne sont pas adjacents et ne sont pas en position α peuvent être remplacés par des atomes et/ou des groupes d'atomes choisis dans le groupe constitué par -O-, -S-, -S(O)-, -SO₂-, -SO₂O-, -C(O)-, -C(O)O-, -N⁺(R'₂)-, -P(O)R'O-, -C(O)NR'-; -SO₂NR'-, -OP(O)R'O-, -P(O)(N(R')₂)NR'-, -P(R')₂=N- ou -P(O)R'-, où R' dans chaque cas, indépendamment les uns des autres, désigne H, C₁-à C₁₈-alkyle non fluoré, partiellement fluoré ou perfluoré, linéaire ou ramifié, C₃- à C₇-cycloalkyle saturé, phényle non substitué ou substitué et X dans chaque cas, indépendamment les uns des autres, désigne halogène,
ou un cation hétérocyclique de formule (8),
[HétN]^{z+} (8),
où
HétN^{z+} désigne un cation hétérocyclique choisis dans le groupe constitué par 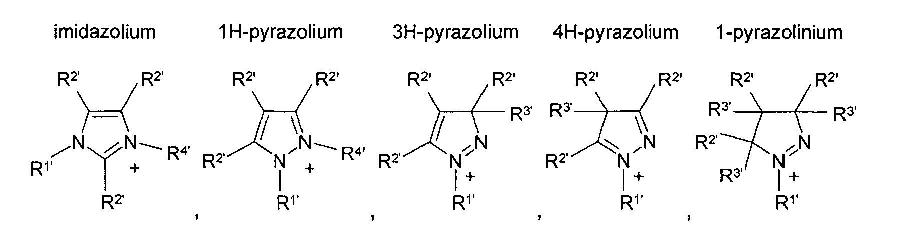 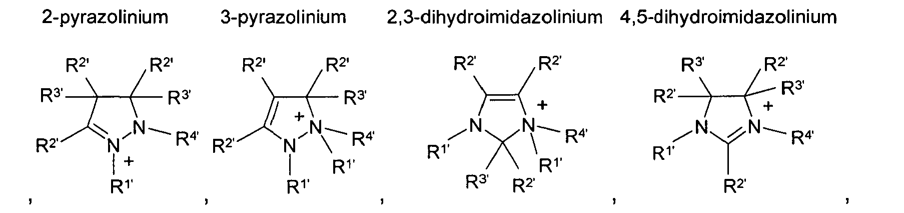 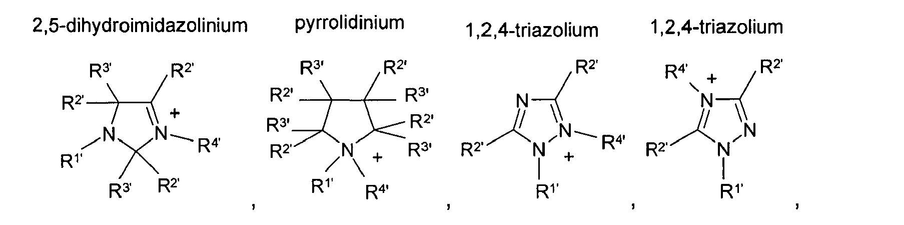 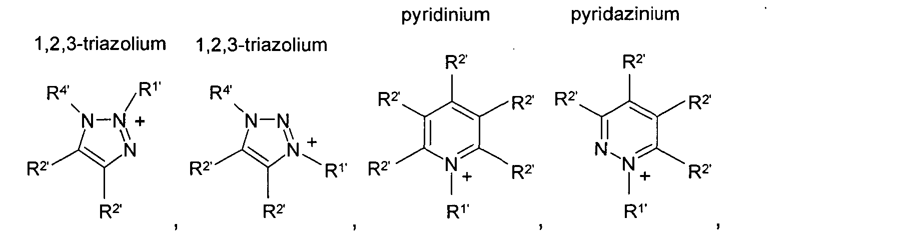 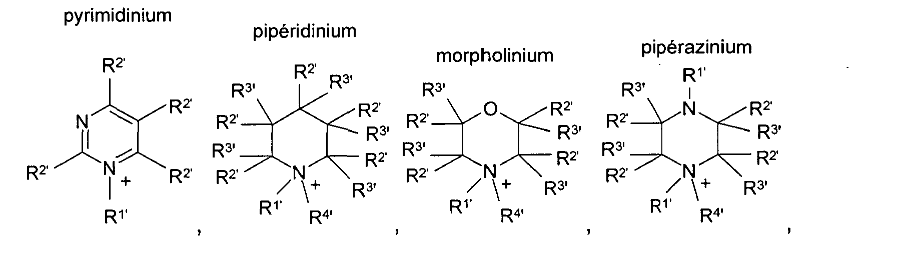 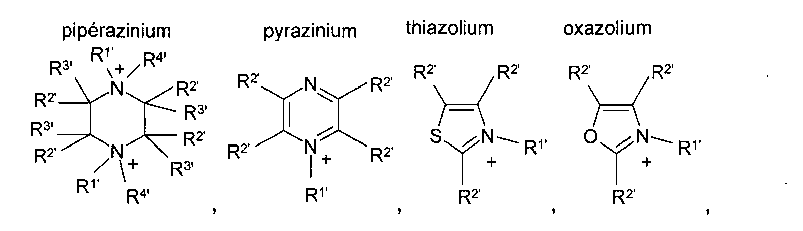 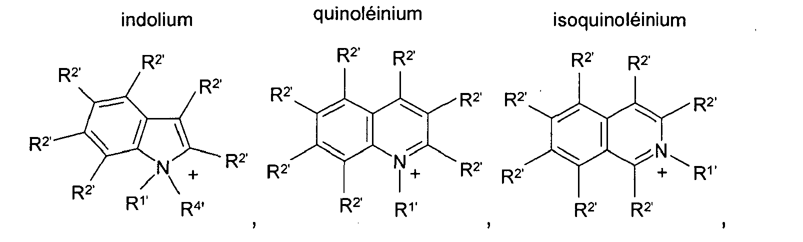 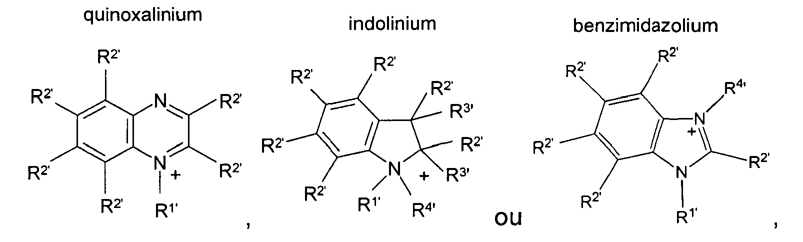
où les substituants
R^{1'} à R^{4'} désignent chacun, indépendamment les uns des autres, H, à condition que R^{1'} et R^{4'} ne soient pas ensemble H,
alkyle à chaîne linéaire ou ramifiée ayant 1-20 atomes de C,
alcényle à chaîne linéaire ou ramifiée ayant 2-20 atomes de C et une ou plusieurs doubles liaisons,
alcynyle à chaîne linéaire ou ramifiée ayant 2-20 atomes de C et une ou plusieurs triples liaisons,
cycloalkyle saturé, partiellement ou totalement insaturé ayant 3-7 atomes de C, pouvant être substitué par des groupements alkyle à chaîne linéaire ou ramifiée ayant 1-6 atomes de C, hétéroaryle, hétéroaryl-C₁-C₆-alkyle ou aryl-C₁-C₆-alkyle saturé, partiellement ou totalement insaturé et
R^{2'} désigne en outre F, Cl, Br, I, -CN, -OR', -N(R')₂, -P(O)R'₂, -P(O)(OR')₂, -P(O)(N(R')₂)₂, -C(O)R', -C(O)OR', -C(O)X, -C(O)N(R')₂, -SO₂N(R')₂, -SO₂OH, -SO₂X, -SR', -S(O)R', -SO₂R' et/ou NO₂, à condition que R^{1'}, R^{3'} et R^{4'} soient alors chacun, indépendamment les uns des autres, H et/ou alkyle à chaîne linéaire ou ramifiée ayant 1-20 atomes de C et/ou alcényle à chaîne linéaire ou ramifiée ayant 2-20 atomes de C et une ou plusieurs doubles liaisons,
où les substituants R^{1'}, R^{2'}, R^{3'} et/ou R^{4'} peuvent également former ensemble un noyau,
où un, deux ou trois substituants R^{1'} à R^{4'} peuvent être totalement substitués par des halogènes, en particulier -F et/ou -Cl, et un ou plusieurs substituants R^{1'} à R^{4'} peuvent être partiellement substitués par des halogènes, en particulier -F et/ou -Cl, et/ou -OH, -OR', -N(R')₂, -CN, -C(O)OH, -C(O)OR', -C(O)R', -C(O)N(R')₂, -SO₂N(R')₂, -C(O)X, -SO₂OH, -SO₂X, -SR', -S(O)R', -SO₂R', -NO₂, mais où R^{1'} et R^{4'} ne peuvent être simultanément totalement substitués par des halogènes, et où un ou deux atomes de carbone des substituants R^{1'} à R^{4'} qui ne sont pas adjacents et ne sont pas liés à l'hétéroatome peuvent être remplacés par des atomes et/ou des groupes d'atomes choisis parmi -O-, -S-, -S(O)-, -SO₂-, -SO₂O-, -C(O)-, -C(O)O-, -N⁺(R'₂)-, -P(O)R'O-, -C(O)NR'-, -SO₂NR'-, -OP(O)R'O-, -P(O)(N(R')₂)NR'-, -P(R')₂=N- ou -P(O)R'-, où R' dans chaque cas, indépendamment les uns des autres, désigne H, C₁-à C₁₈-alkyle non fluoré, partiellement fluoré ou perfluoré, linéaire ou ramifié, C₃- à C₇-cycloalkyle saturé, phényle non substitué ou substitué et X dans chaque cas, indépendamment les uns des autres, désigne halogène,
halogène désigne F, Cl, Br ou I,
ou un cation tritylium,
ou **en ce que** Kt correspond à un cation métallique issu des groupes 1 à 12 du Tableau Périodique, choisi parmi les cations de métal alcalin, Ag⁺, Mg²⁺, Cu⁺, Cu²⁺, Zn²⁺, Ca²⁺, Y⁺³, Yb⁺³, La⁺³, Sc⁺³, Ce⁺³, Nd⁺³, Tb⁺³, Sm⁺³ ou les cations métalliques complexes (contenant des ligands) qui contiennent des terres rares, des métaux de transition ou nobles, tels que le rhodium, le ruthénium, l'iridium, le palladium, le platine, l'osmium, le cobalt, le nickel, le fer, le chrome, le molybdène, le tungstène, le vanadium, le titane, le zirconium, l'hafnium, le thorium, l'uranium, l'or.

7. Procédé selon la revendication 5 ou 6, **caractérisé en ce que** la réaction d'échange de sels est effectuée dans un solvant organique ou dans l'eau.
